# EUROPEAN PATENT SPECIFICATION

(11) **EP 3 117 587 B1**
(45) Date of publication and mention of the grant of the patent: **11.11.2020**
(21) Application number: 15717690.0
(22) Date of filing: 11.03.2015
(51) Int. Cl.: H04L 29/06, H04L 29/12, H04W 4/70

(54) **ENHANCED DISTRIBUTED RESOURCE DIRECTORY**
ERWEITERTES VERTEILTES RESSOURCENVERZEICHNIS
RÉPERTOIRE DE RESSOURCES RÉPARTI AMÉLIORÉ

(30) Priority: 11.03.2014 US 201461951141 P
(43) Date of publication of application: 18.01.2017
(73) Proprietor: Convida Wireless, LLC, Wilmington, DE 19809-3727 (US)
(72) Inventor: DONG, Lijun, San Diego, CA 92130 (US); WANG, Chonggang, Princeton, NJ 08540 (US); SEED, Dale, N., Allentown, PA 18104 (US); LY, Quang, North Wales, PA 19454 (US)
(74) Representative: D Young & Co LLP
(86) International application number: PCT/US2015/019942
(87) International publication number: WO 2015/138596

(56) References cited:
- US-A1- 2009 164 485

## Description

### BACKGROUND

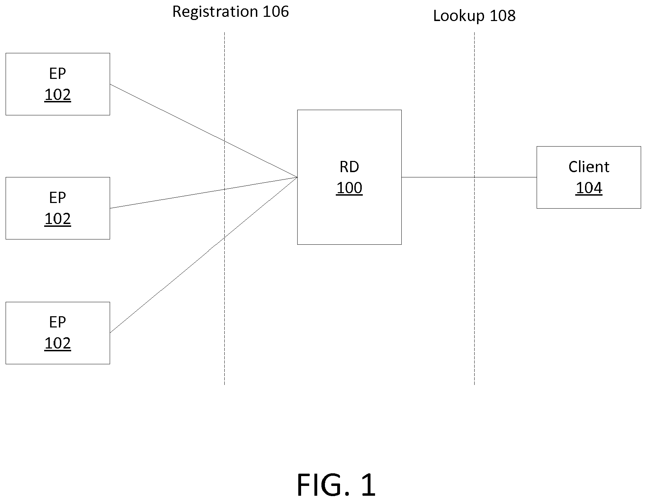

Resource constrained nodes and networks constitute an important portion of the Machine-to-Machine (M2M) and Internet of Things (IoT) systems. The Internet Engineering Task Force (IETF) Constrained RESTful Environments (CoRE) Working Group (IETF CoRE) has developed the CoRE Resource Directory (RD). Fig. 1 shows an example of a CoRE resource directory architecture, and the CoRE Resource directory specifies web interfaces that a Resource Directory supports so that web servers can discover the Resource Directory. Further, the web interfaces allow web servers to register, maintain, lookup, and remove resource descriptions. IETF has also defined link attributes that can be used in conjunction with a Resource Directory.

Referring to Fig. 1, a Resource Directory 100 within the CoRE RD architecture is depicted. The Resource Directory 100 can be a repository for web links associated with resources hosted on other webs servers, which can generally be referred to as endpoints, for instance endpoints 102. An endpoint may refer to a web server associated with a port, and thus a physical node may host one or more endpoints. An endpoint can be hosted in various M2M/IoT devices. The Resource Directory 100 implements a set of RESTful (representation state transfer) interfaces for endpoints 102 to register and maintain sets of Web Links (called resource directory entries). Interfaces also enable the Resource Directory to validate entries, and enable clients (e.g., clients 104) to lookup resources from the Resource Directory 100. A resource generally refers to a uniquely addressable entity in a RESTful architecture. Endpoints can also act as clients, and therefore clients can also be hosted in M2M/IoT devices.

Still referring generally to Fig. 1, the endpoints 102 proactively register and maintain resource directory entries on the Resource Directory 100. The entries are soft state and may need to be periodically refreshed. The endpoints 102 are provided with interfaces to register, update, and remove a given resource directory entry. Furthermore, a Resource Directory can be discovered using a CoRE Link Format. A Resource Directory, for instance the Resource Directory 100, may proactively discover Web Links from endpoints 100 and add them as resource directory entries. The Resource Directory 100 may also proactively discover Web Links to validate existing resource directory entries. A lookup interface for discovering the Web Links held in the Resource Directory 100 is provided using the CoRE Link Format.

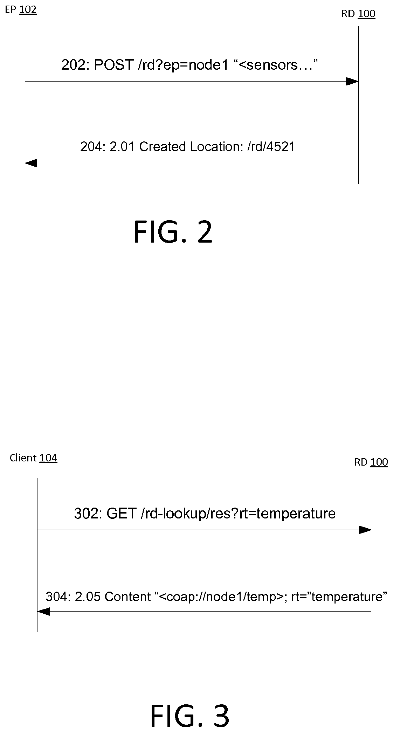

Fig. 2 illustrates a current technique of resource registration in the CoRE Resource Directory Architecture. Referring to Fig. 1 and 2, an endpoint 102 registers its resources using a registration interface 106. At 202, the registration interface 106 accepts a POST from the endpoint 102. The POST may contain a list of resources to be added to the directory in the message payload in accordance with the CoRE Link Format. The POST may also contain query string parameters that indicate the name of the endpoint 102, a domain associated with the endpoint 102, and the lifetime of the registration. In the example, all parameters except the endpoint name are optional. The Resource Directory 100 then creates a new resource or updates an existing resource in the Resource Directory and returns its location (at 204). In accordance with the example, the endpoint 100 uses the location it receives when refreshing registrations using the registration interface 106. Endpoint resources in the Resource Directory 100 are kept active for the period indicated by the lifetime parameter. The endpoint 102 is responsible for refreshing the entry within this period using either the registration interface 106 or the update interface.

Continuing with the background example with reference to Figs. 1 to 3, in order for the Resource Directory 100 to be used for discovering resources registered with it, a lookup interface 108 can be provided. The example lookup interface 108 is specified for the client 104 to interact with the RD 100, for instance to implement a "GET" method. An example URI Template is /{+rd-lookup-base}/{lookup-type} {?d,ep,gp,et,rt,page,count,resource-param}. Example parameters include:
- rd-lookup-base := RD Lookup Function Set path (mandatory). This is the path of the RD Lookup Function Set. In some cases, an RD uses the value "rd-lookup" for this variable whenever possible.
- lookup-type := ("d", "ep", "res", "gp") (mandatory). This variable is used to select the kind of lookup to perform (e.g., domain, endpoint, or resource).
- ep := Endpoint (optional). Used for endpoint, group, and resource lookups.
- d := Domain (optional). Used for domain, group, endpoint, and resource lookups.
- page := Page (optional). Parameter cannot be used without the count parameter. Results are returned from result set in pages that contains "count" results starting from index (page ^{∗} count).
- count := Count (optional). Number of results may be limited to this parameter value. In some cases, if the parameter is not present, then an RD implementation specific default value is used.
- rt := Resource type (optional). Used for group, endpoint, and resource lookups.
- et := Endpoint type (optional). Used for group, endpoint and resource lookups.
- resource-param := Link attribute parameters (optional). This parameter may indicate any link attribute as defined in Section 4.1 of RFC 6690 "Core Link Format." Used for resource lookups.

Fig. 3 illustrates a current technique for resource lookup in the CoRE Resource Directory Architecture. As shown, at 302, the client 104 looks up the resource type (rt) parameter. In the example, the client 104 is attempting to discover resources with a temperature resource type (e.g., temperature sensors). Thus, the resource type is set to temperature. At 304, as shown, the RD 100 returns the resource with the URI of "coap://nodel/temp".

The Resource Directory 100, as specified in the CoRE Resource Directory Architecture, is centralized. The centralized Resource Directory lacks scalability across the Internet. For example, certain clients may only want to access resources in their local domains. The centralized Resource Directory does not support such localized resource management well without affecting other clients. As a result, a distributed resource directory has been proposed.

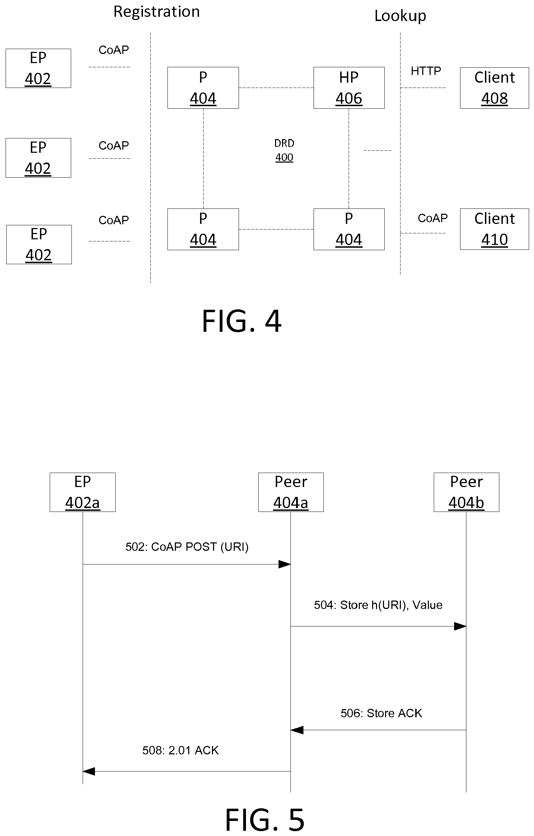

Fig. 4 illustrates an example Distributed Resource Directory DRD 400 in an example DRD architecture. The proposed Distributed Resource Directory architecture specifies the interfaces to a Distributed Hash Table and specifies how to use Distributed Hash Table capabilities to enable a Distributed Resource Directory. Participating Resource Directories form into a Distributed Resource Directory overlay. The proposed Distributed Resource Directory (DRD) architecture provide the same REST interfaces as the centralized Resource Directory. Endpoints may be physical nodes that may run one or more constrained application protocol (CoAP) servers, and can use REST operations (e.g. POST, GET) in the DRD. Endpoints can also act as clients. Thus, endpoints may be referred to as CoAP Clients. Traditional or legacy HTTP Clients may also need to access the resources stored in the DRD. As shown, the various nodes in the DRD architecture include endpoints (EP) 402, peers (P) 404, an HTTP Proxy (HP) 406, HTTP Clients 408, and CoAP Clients 410. As shown, the endpoints 402 are entities that reside on a "Node" and communicate using the CoAP protocol, and thus can be referred to as CoAP endpoints. A CoAP endpoint can be the source or destination of a CoAP message. The Peers 404 are full overlay member nodes, which are capable of forwarding messages following a path through the overlay to the destination. Some Peers can also act as HTTP Proxies 406. In other words, besides acting as a peer, the node also acts as a proxy for protocol translation. The HTTP proxies 406 are capable of running both HTTP and CoAP protocols, as well as performing translation between the two. The HTTP Clients 408 are clients that send out requests to a given resource directory using HTTP messages. The CoAP Clients 410 are CoAP entities that send out requests to a given resource directory using CoAP messages.

Fig. 5 illustrates a current technique of resource registration in the Distributed Resource Directory 400. For example, in resource registration, at 502, a EP 402a sends a CoAP POST message that contains the list of resources (in the payload of the message) to register its resources into the Distributed Resource Directory 400. The EP 402 does this so that its resource can be discoverable. When a peer, for instance the first peer 404a (which runs a Distributed Hash Table algorithm to participate in the Distributed Resource Directory overlay) receives a registration message, it stores the CoAP Registration structure under the hash of the resource's CoAP URI in the Distributed Hash Table (at 504). The payload of the CoAP Registration is stored as the value into the overlay. After getting the Distributed Hash Table ACK message from a second peer 404b at 506, the first peer 404a sends a CoAP ACK message to the EP 402a (at 508) to indicate that the resource is registered into the Distributed Resource Directory 400.

The POST request at 502 includes a query string parameter to indicate the name of the endpoint 402a, which is used to uniquely identify the endpoint 402a. The endpoint name setting has different alternatives. One method is to hash the MAC address of the device to generate the endpoint name. Another method is to use common names

As an example, still referring to Figs. 4 and 5, if an endpoint with name "9996172" wants to register one temperature resource and one light resource descriptions into the Distributed Resource Directory 400, the endpoint sends a POST request with the URI "coap://overlay-1.com/proxy-1/.well-known/core?ep=9996172". The resource descriptions are included in the payload of the message. An example of the registration message is given below:

```
     Req: POST coap://overlay-1.com/proxy-1/.well-known/core?ep=9996172
     Payload:
     </temperature-1>;lt=41;rt="Temperature";if="sensor",
     </light-2>;lt=41;rt="LightLux";if="sensor"
```

As a result, the key that is applied to the hashing function is coap://overlay-1.com/proxy-1/.well-known/core?ep=9996172, which determines that the second peer 404b (P2) is the peer to store the value. The value stored on the second peer 404b is the payload.

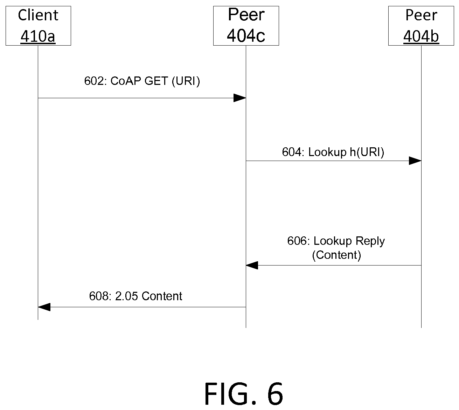

Referring also to Fig. 6, Fig. 6 illustrates a current technique of resource discovery in the Distributed Resource Directory 400. The Distributed Resource Directory 400 supports rendezvous by fetching the mapping information between CoAP URIs and Node-IDs to get the address information of resources. Specifically, at 602, an endpoint (Client 410a in Fig. 6) sends a CoAP GET request to the Distributed Resource Directory 400, including the URI information of the requested resource. The Distributed Resource Directory peer that is handling this request (peer 404c in Fig. 6) performs a Distributed Hash Table Lookup for the hash of the CoAP URI, at 604. The Distributed Hash Table then finds a peer (peer 404b in Figure 6) that is responsible for the value of the resource. At 606, the destination peer 404b returns the stored value to the peer 404c. At 608, the peer 404c sends the content (e.g., stored value) back to the client 410, which can also be referred to as the endpoint 410a.

For example, if the client 410a wants to discover the resource with the URI: coap://overlay-1.com/proxy-1/.well-known/core?ep=9996172 as specified herein, the peer 404c receives the GET request, and uses the hashing function to the URI, which maps to the peer 404b. As a result, the peer 404c forwards the request to the peer 404b. The peer 404b returns the payload of the resource to the peer 404c, which in turn returns the payload to the client 410a.

US2009164485A relates to devices and methods for finding REST resources and constraints using an n-ary tree structure navigated using a collision free progressive hash. It provides a data structure in the form of a tree structure that includes nodes for URL portions, where each node is associated with a hash tree specifically grown in a manner that ensures collision occurrences are non-existent.

### SUMMARY

As described above, the CoRE Resource Directory includes a central Resource Directory, such that the CoRE Resource Directory is centralized. It is recognized herein that the centralized directory is not efficiently accessed by clients simultaneously and is not efficiently scaled for an IoT system or M2M network. Furthermore, it is recognized herein that the Distributed Resource Directory described above has limited registration capabilities and lookup capabilities, among other shortcomings.

Described herein are methods, devices, and systems for an enhanced distributed resource directory (DRD). The present invention provides a node and a method as claimed in the appended claims. In an example embodiment, a node, for instance a resource directory node, in a distributed resource directory network receives a message payload from an endpoint. The message payload may include a registration request or a resource lookup request. Upon receiving the message payload, the resource directory server may determine keys associated with the message payload. The keys may have parameters and values associated with the parameters. Upon determining the keys, the keys are applied to a hash function to generate mapping information associated with peer resource directories. Based on the mapping information, the resource directory server may transmit the message payload to peer resource directories. Upon transmitting the message payload, the resource directory node may receive responses from the peer resource directories. The responses may indicate locations or contents of the resources stored at the peer resource directories. Upon receiving the responses, the resource directory node may generate a resulting response by combining the responses. The resource directory node may transmit the resulting response to requesting endpoint, which may be web server. The resulting response may include hash parameters.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

A more detailed understanding may be had from the following description, given by way of example in conjunction with accompanying drawings wherein:
Fig. 1 is a system diagram illustrating the Constrained RESTful Environment (CoRE) resource directory architecture;
Fig. 2 is a flow diagram illustrating an example of resource registration in the CoRE resource directory architecture;
Fig. 3 is a flow diagram illustrating an example of resource lookup in the CoRE resource directory architecture;
Fig. 4 is a system diagram illustrating an example distributed resource directory architecture;
Fig. 5 is a flow diagram illustrating an example of resource registration in the distributed resource directory depicted in Fig. 4;
Fig. 6 is a flow diagram illustrating an example of resource discovery in the distributed resource directory depicted in Fig. 4;
Fig. 7 is a flow diagram illustrating resource registration from an endpoint using a storage assisted mechanism in accordance with an example embodiment;
Fig. 8 is a flow diagram illustrating resource registration from another end point in a storage assisted mechanism in accordance with an example embodiment;
Fig. 9 is a flow diagram illustrating light group registration in a storage assisted mechanism in accordance with an example embodiment;
Fig. 10 is a flow diagram illustrating pressure group registration in a storage assisted mechanism in accordance with an example embodiment;
Fig. 11 is a flow diagram illustrating a resource lookup in a storage assisted implementation in accordance with an example embodiment;
Fig. 12 is a flow diagram illustrating another resource lookup in a storage assisted implementation in accordance with an example embodiment;
Fig. 13 is a flow diagram illustrating yet another resource lookup in a storage assisted implementation in accordance with an example embodiment;
Fig. 14 is a flow diagram illustrating yet another resource lookup in a storage assisted implementation in accordance with an example embodiment;
Fig. 15 is a flow diagram illustrating an example of resource registration in accordance with an example embodiment;
Fig. 16 is a flow diagram illustrating another example of resource registration in accordance with another example embodiment;
Fig. 17 is a flow diagram illustrating a lights group registration in accordance with an example embodiment;
Fig. 18 is a flow diagram illustrating a pressure group registration in accordance with an example embodiment;
Fig. 19 is a flow diagram illustrating a resource lookup example in a reference ensured implementation in accordance with an example embodiment;
Fig. 20 is a flow diagram illustrating another resource lookup example in a reference ensured implementation in accordance with an example embodiment;
Fig. 21 is a flow diagram illustrating yet another resource lookup in a reference ensured implementation in accordance with an example embodiment;
Fig. 22A is a system diagram of an example machine-to-machine (M2M) or Internet of Things (IoT) communication system in which one or more disclosed embodiments may be implemented;
Fig. 22B is a system diagram of an example architecture that may be used within the M2M / IoT communications system illustrated in Fig. 22A;
Fig. 22C is a system diagram of an example M2M / IoT terminal or gateway device that may be used within the communications system illustrated in Fig. 22A; and
Fig. 22D is a block diagram of an example computing system in which aspects of the communication system of Fig. 22A may be embodied.

### DETAILED DESCRIPTION

The ensuing detailed description is provided to illustrate exemplary embodiments and is not intended to limit the scope, applicability, or configuration of the invention. Various changes may be made in the function and arrangement of elements and steps without departing from the spirit and scope of the invention.

The term "overlay network," as used herein, refers to a network that is built on the top of another network. Nodes in an overlay network can be thought of as being connected by virtual or logical links, each of which correspond to a path, in the underlying network. For example, distributed systems such as peer-to-peer (P2P) networks can be considered overlay networks because their nodes run on top of the Internet. A node that is a "Home Resource Directory (RD)", as used herein, refers to the first point of contact for an endpoint (EP) when the EP wants to register its resources. A Home RD an also refer to the first point of contact for a client when a client wants to discover resources. As used herein, a node that is a "Storing RD" may refer to a peer that stores a resource registration entry and to where the home RD forwards a client's discovery request. As used herein, unless otherwise specified, a node that is a "Responsible RD" may refer to the RD of peers that result from using a hashing function on all possible keys in a resource registration message. A used herein, unless otherwise specified, a node that is a "Core Responsible RD" refers to one of the responsible RDs that is the first point of contact to which the home RD forwards a resource discovery request.

In accordance with an example embodiment, an enhanced distributed resource directory, as described herein, can support resource lookup without knowing the uniform resource identifier (URI) of the resource. In one example, multiple copies of resource descriptions are stored in multiple resource directories (RDs), which are referred to herein as peer RDs. In another example implementation described herein, referred to as reference ensured (RE) implementation, a home peer sends a registration message to only one peer RD, and notifies other peer RDs of where resources and information associated therewith is stored.

Referring generally to the distributed resource directory architecture depicted in Fig. 4, embodiments described herein enable an advanced distributed resource lookup. In one example, the clients do not need to know the resource URI ahead of time to discover and retrieve resources. For example, clients may request and lookup the resources specifying link parameter-based queries to their respective home RD. In other words, the distributed resource directories can return the resources that satisfy the link parameter based queries to the clients.

In an example embodiment, which can be referred to as a storage assisted (SA) implementation, redundant copies of resource registrations are provided in multiple peers. It is recognized herein that as data storage capacities have increased, the costs associated with such data storage has decreased, and thus peers can be efficiently equipped with data storage capabilities. As described in detail below, peers may be chosen for data storage by using a hashing function on the possible key words/parameters in the value of a resource. The chosen peers may store the resource registration using their storage capabilities. In some cases, it is assumed that one hashing function, which is denoted as H(), is applied to generate the unified and distributed hashing space among all resource directory peers.

For convenience, as used herein unless otherwise specified, a peer RD can be referred to as simply a peer. A client can designate various lookup key words/parameters, such as the following presented below way of example and without limitation:
- d: domain
- ep: endpoint
- gp: group name
- et: endpoint type
- rt: resource type
- It: resource life time
- if: interface

To further illustrate, the following are examples, presented without limitation, of resources and their payloads that may be registered to one or more RD peers:
1. ep=9996172
   payload: </temperature-1>;lt=41;rt="Temperature";if="sensor", </temperature-2>;lt=41;rt="LightLux";if="sensor"
2. ep=9234571
   payload: </Temp-1>;rt="Temperature"; if="gateway"
3. gp=lights
   payload: <coap://host1:port1>; ep="node1";d="domain1" < coap://host1:port 1>;ep="node2";d="domain1"
4. gp=pressure
   Payload < coap://host2:port 2>;ep="node2";d="domain1"

In an example embodiment, a given endpoint can find a directory server by obtaining the candidate IP addresses in various ways. For example, in some cases, each peer RD has at least the following base RD resources: </rd>;rt="core.rd"; </rd-lookup>;rt="core.rd-lookup"; and </rd-group>;rt="core.rd-group". As described herein, an endpoint may register its resources to its home RD using the resource interface. This interface may accept a POST from an endpoint. The POST may contain the list of resources to be added to the directory as the message payload in the CoRE Link Format. The POST may also contain query string parameters. In some cases, instead of just hashing the name of the endpoint or the group, the peer RD may apply the hashing function to all parameters and their values contained in the payload of the resource (e.g., the resource link format description). After the hashing function is applied, the home RD may obtain the addresses of the peers that are responsible for storing the resources having the same parameter. Thus, by leveraging the large storage capacity of peers and low cost associated therewith, the home RD may send the resource payload to the hashed peers. As mentioned above, there are four example resources and payloads that are described herein to further described an example SA implementation. The example that includes a resource registration of the EP 9996172, which is illustrated as EP 702 in Fig. 4, will be described first.

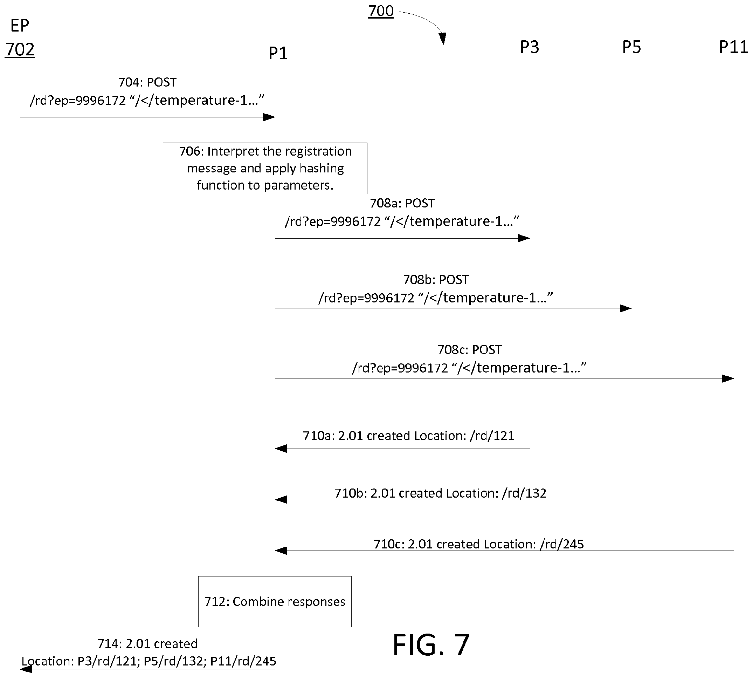

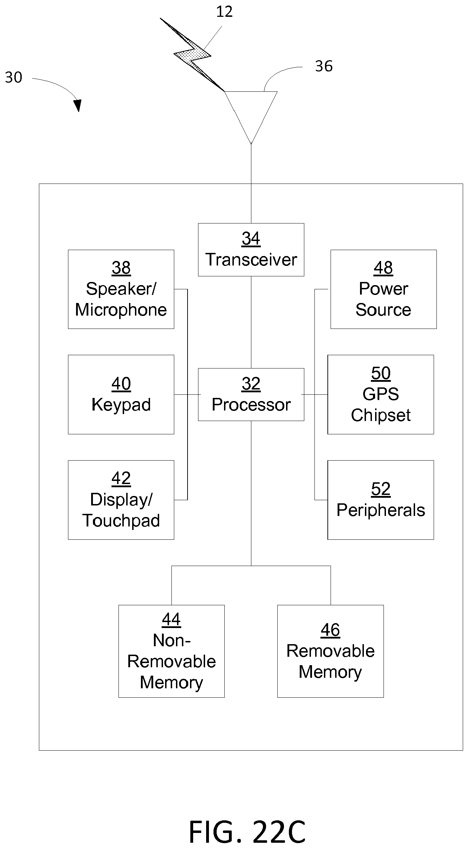

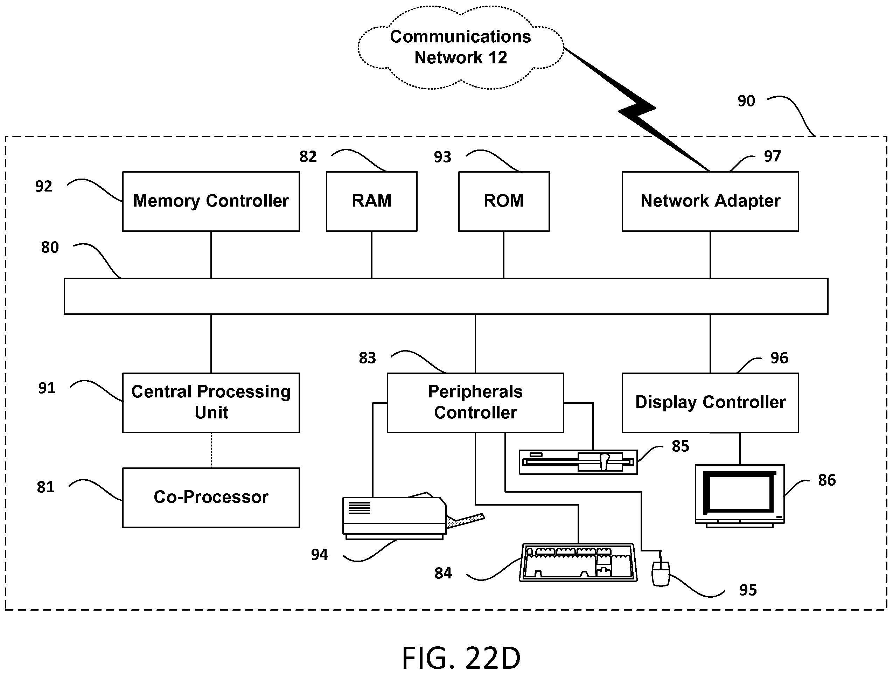

Figs. 7-21 (described hereinafter) illustrate various embodiments of methods and apparatus for managing and retrieving resources. In these figures, various steps or operations are shown being performed by one or more endpoints, clients, and/or peers. It is understood that the endpoints, clients, and/or peers illustrated in these figures may represent logical entities in a communication network and may be implemented in the form of software (e.g., computer-executable instructions) stored in a memory of, and executing on a processor of, a node of such network, which may comprise one of the general architectures illustrated in Figs. 22C or 22D described below. That is, the methods illustrated in Figs. 7-21 may be implemented in the form of software (e.g., computer-executable instructions) stored in a memory of a network node, such as for example the node or computer system illustrated in Figs. 22C or 22D, which computer executable instructions, when executed by a processor of the node, perform the steps illustrated in the figures. It is also understood that any transmitting and receiving steps illustrated in these figures may be performed by communication circuitry (e.g., circuitry 34 or 97 of Figs. 22C and 22D, respectively) of the node under control of the processor of the node and the computer-executable instructions (e.g., software) that it executes.

Referring now to Fig. 7, an example network 700 includes the EP 702 and peers 1, 3, 5, and 11 (P1, P3, P5, and P11). It will be appreciated that the example network 700 is simplified to facilitate description of the disclosed subject matter and is not intended to limit the scope of this disclosure. Other devices, systems, and configurations may be used to implement the embodiments disclosed herein in addition to, or instead of, a network such as the network 400, and all such embodiments are contemplated as within the scope of the present disclosure. It will further be appreciated that reference numbers may be repeated in various figures to indicate the same or similar features in the figures.

As shown, in accordance with the illustrated example, the endpoint 702 has a name of 9996172 and registers its resources to the P1, which is its home RD, at 704. At 706, the P1 may interpret the link format contained in the payload and determine that the key words/parameters associated with this registration are:
- ep=9996172
- lt=41
- rt="Temperature"
- rt="LightLux"
- if="sensor"

The above keywords/parameters may be used as keys to be applied to the hashing function. When the hashing function is applied, in accordance with the example, the results include P3, P5, and P11. Thus, at 708a, 708b, and 708c, P1 forwards the registration message to P3, P5, and P7, respectively. Each of the peers P3, P5, and P7 stores the payload and returns a confirmation to P1 (at 710a-c). At 712, the P1 may combine the confirmation responses. At 714, in response to the confirmations, the P1 replies to the EP 702. In some cases, different keys result in the registration message being forwarded to the same peer RD. For example, by hashing lt=41 or if= "sensor", the result of both hashes may indicate that P5 should be a peer resource directory. Similarly, when hashing rt= 'Temperature" and rt= "LightLux", the result of both hashes may indicate that P11 should be a peer resource directory.

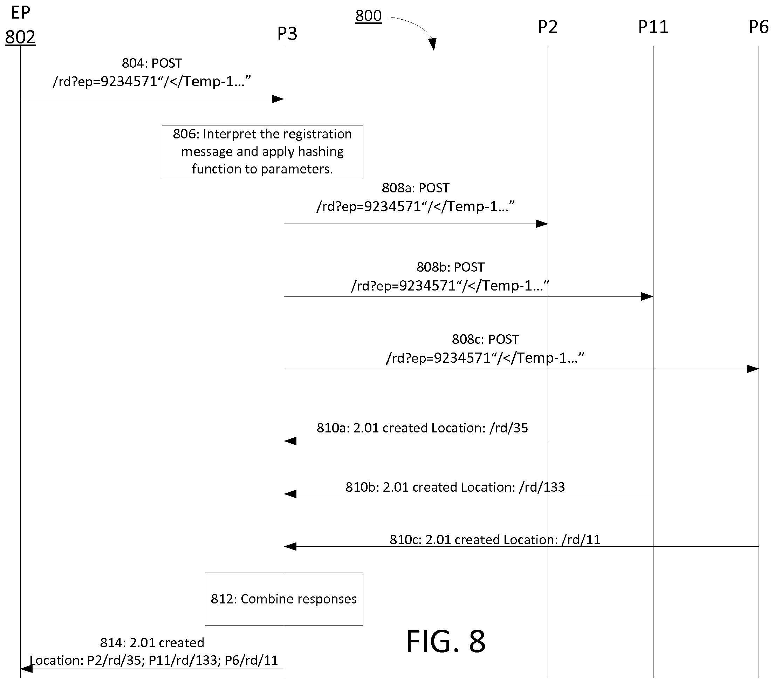

Referring now to Fig. 8, an example network 800 includes an EP 9234571, illustrated as EP 802, and peers 3, 2, 11, and 6 (P3, P2, P11, and P6). It will be appreciated that the example network 800 is simplified to facilitate description of the disclosed subject matter and is not intended to limit the scope of this disclosure. Other devices, systems, and configurations may be used to implement the embodiments disclosed herein in addition to, or instead of, a network such as the network 800, and all such embodiments are contemplated as within the scope of the present disclosure.

As shown, in accordance with the illustrated example, the endpoint 802 has a name of 9234571 and registers its resources to the P3, which is its home RD, at 804. At 806, the P3 may interpret the link format contained in the payload and determine that the key words/parameters associated with this registration are:
- ep=9234571
- rt="Temperature"
- if="gateway"

The above keywords/parameters may be used as inputs of the hashing function. When the hashing function is applied, in accordance with the example, the results include P2, P11, and P5. Thus, at 808a, 808b, and 808c, P3 forwards the registration message to P2, P11, and P5, respectively. Each of the peers P2, P11, and P5 stores the payload and returns a confirmation to P3 (at 810a-c). At 812, the P3 may combine the confirmation responses. At 814, in response to the confirmations, the P3 replies to the EP 802.

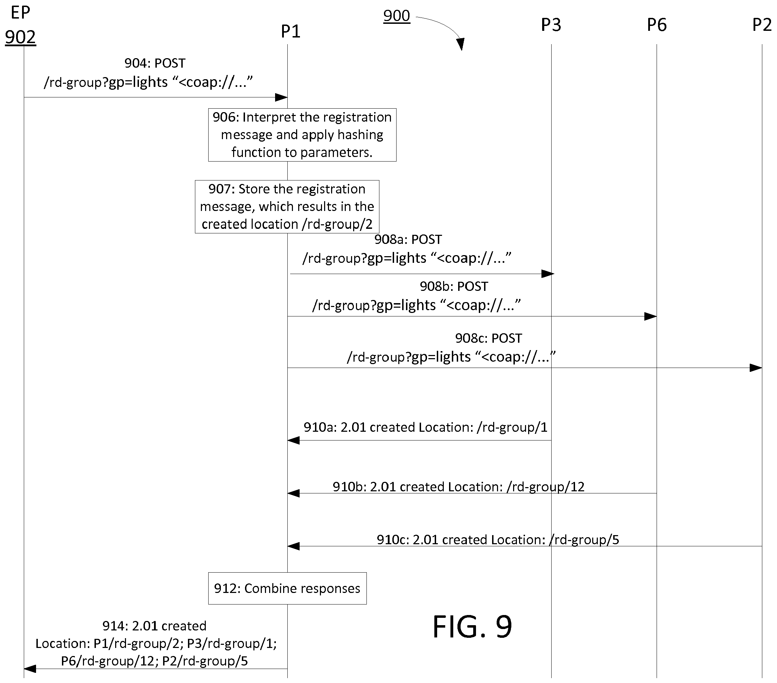

Referring now to Fig. 9, a "lights" group registration example is presented in accordance with an example embodiment. As shown, an example network 900 includes an EP 902, which is also a management node as described below, and peers 1, 3, 6, and 2 (P1, P3, P6, and P2). It will be appreciated that the example network 900 is simplified to facilitate description of the disclosed subject matter and is not intended to limit the scope of this disclosure. Other devices, systems, and configurations may be used to implement the embodiments disclosed herein in addition to, or instead of, a network such as the network 900, and all such embodiments are contemplated as within the scope of the present disclosure.

As shown, in accordance with the illustrated example, a management node (EP 902) used to configure a group. At 904, the EP 902 makes a request to its home RD (P1). The request indicates the name of the group to create and the optional domain to which the group belongs. The registration message may also include the list of endpoints that belong to that group. At 906, the P1 may interpret the link format contained in the payload and determine that the key words/parameters associated with this registration are:
- gp=lights
- ep="node1"
- d="domain1"
- ep="node2"

The above keywords/parameters may be used as inputs of the hashing function. When the hashing function is applied, in accordance with the example, the results include P1, P3, P6, and P2. Thus, at 908a, 908b, and 908c, P1 forwards the registration message to P3, P6, and P2, respectively. Each of the peers P3, P6, and P2 stores the payload and returns a confirmation to P1 (at 910a-c). Because the P1 is one of the hashed peers, it may also store the registration message, at 907. At 912, the P3 may combine the confirmation responses. At 914, in response to the confirmations, the P3 replies to the EP 902.

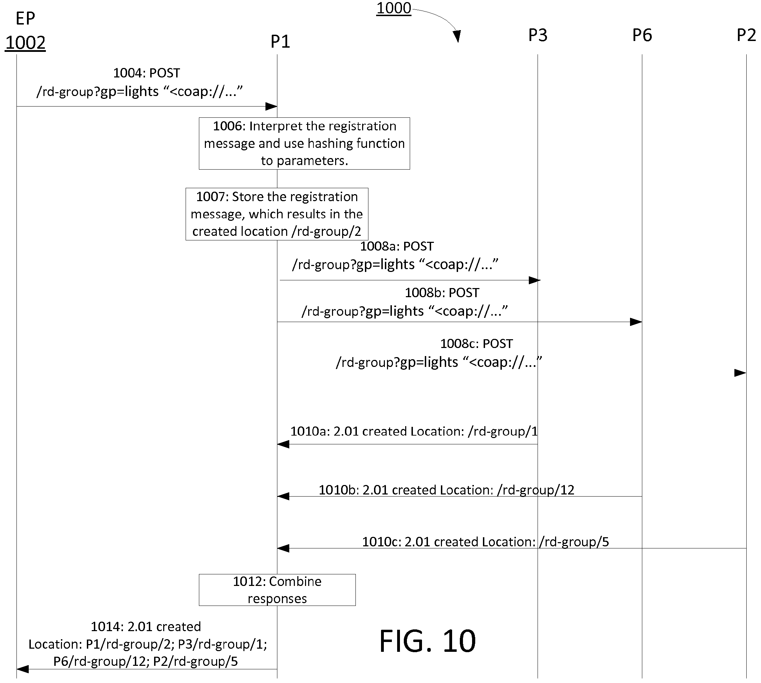

Referring now to Fig. 10, a "pressure" group registration example is presented in accordance with an example embodiment. As shown, an example network 1000 includes an EP 1002, which is also a management node as described below, and peers 1, 3, 6, and 2 (P1, P3, P6, and P2). It will be appreciated that the example network 1000 is simplified to facilitate description of the disclosed subject matter and is not intended to limit the scope of this disclosure. Other devices, systems, and configurations may be used to implement the embodiments disclosed herein in addition to, or instead of, a network such as the network 1000, and all such embodiments are contemplated as within the scope of the present disclosure.

As shown, in accordance with the illustrated example, a management node (EP 902) used to configure a group. At 1004, the EP 1002 makes a request to its home RD (P1). The request indicates the name of the group to create and the optional domain to which the group belongs. The registration message may also include the list of endpoints that belong to that group. At 1006, the P1 may interpret the link format contained in the payload and determine that the key words/parameters associated with this registration are:
- gp=pressure
- d="domain1"
- ep="node2"

The above keywords/parameters may be used as inputs of the hashing function. When the hashing function is applied, in accordance with the example, the results include P1, P3, P6, and P2. Thus, at 1008a, 1008b, and 1008c, P1 forwards the registration message to P3, P6, and P2, respectively. Each of the peers P3, P6, and P2 stores the payload and returns a confirmation to P1 (at 1010a-c). Because the P1 is one of the hashed peers, it may also store the registration message, at 1007. At 1012, the P3 may combine the confirmation responses. At 914, in response to the confirmations, the P3 replies to the EP 1002.

By way of example, after the distributed resource and group registration is performed as described with reference to Figs. 7-10, the peer RDs may store the information shown in Table 1 (below), presented by way of example and without limitation.

**Table 1: Example Resource Directory Content**

| **P1** | | |
|---|---|---|
| rd-group | 2 | gp=lights: |
| | | <coap://host1:port1>; ep="node1";d="domain1", |
| | | < coap://host1:port1>;ep="node2";d="domain1" |
| | 3 | gp=pressure: |
| | | < coap://host2:port2>;ep="node2";d="domain1" |

| **P2** | | |
|---|---|---|
| rd | 35 | ep=9234571: |
| | | </Temp-1>;rt="Temperature"; if="gateway" |
| rd-group | 5 | gp=lights: |
| | | <coap://host1:port1>; ep="node1";d="domain1", |
| | | < coap://host1:port1>;ep="node2";d="domain1" |
| | 13 | gp=pressure: |
| | | < coap://host2:port2>;ep="node2";d="domain1" |

| **P3** | | |
|---|---|---|
| rd | 121 | ep=9996172: |
| | | </temperature-1>; lt=41;rt="Temperature";if="sensor", |
| | | </temperature-2>;lt=41;rt="LightLux";if="sensor" |
| rd-group | 1 | gp=lights: |
| | | <coap://host1:port1>; ep="node1";d="domain1", |
| | | < coap://host1:port1>;ep="node2";d="domain1" |

| **P5** | | |
|---|---|---|
| rd | 132 | ep=9996172: |
| | | </temperature-1>; lt=41;rt="Temperature" ;if="sensor", |
| | | </temperature-2>;lt=41;rt="LightLux";if="sensor" |

| **P6** | | |
|---|---|---|
| rd | 11 | ep=9234571: |
| | | </Temp-1>;rt="Temperature"; if="gateway" |
| rd-group | 12 | gp=lights: |
| | | <coap://host1:port1>; ep="node1";d="domain1", |
| | | < coap://host1:port1>;ep="node2";d="domain1" |

| **P11** | | |
|---|---|---|
| rd | 245 | ep=9996172: |
| | | </temperature-1>; lt=41;rt="Temperature" ;if="sensor", |
| | | </temperature-2>;lt=41;rt="LightLux";if="sensor" |
| | 133 | ep=9234571: |
| | | </Temp-1>;rt="Temperature"; if="gateway" |
| rd-group | 2 | gp=pressure: |
| | | < coap://host2:port2>;ep="node2";d="domain1" |

In some cases, resource and group registration methods described above enable resources and groups to be looked up (discovered) via the existing lookup (discovery) interface described above. Turning now to resource and group lookup, by way of background, a client sends a resource lookup request to its home RD. The resource lookup request can designate the lookup-type and parameters that the client wants to discover. The home RD may analyze the request and extract the keys that the client specifies. In an example embodiment, the home RD applies the hashing function on those keys to compute the peer RDs that stored the resource registrations. The keys may be connected by AND/OR. For example, keys may be connected by AND because each of the resultant RDs (RDS indicated after a hash function is applied) store the same resource registration, and the request may be forwarded to one of them. The home RD may pick up the destination RD randomly or based on certain context information such as, for example, a destination RD's load or a bandwidth between the home RD and the destination RD. Keys may be connected by OR when it is likely that the resources satisfying the specified request may be distributed across the resultant RDs. As a result, the home RD may need to forward the request to all resultant RDs to receive a joint set of the resources.

The home RD may determine the peer RDs to which the request should be forwarded. After the home RD receives the response from the peer RDs, it may generate a lookup result that contains the complete list of resources, without duplication for example, and may return the list to requesting client.

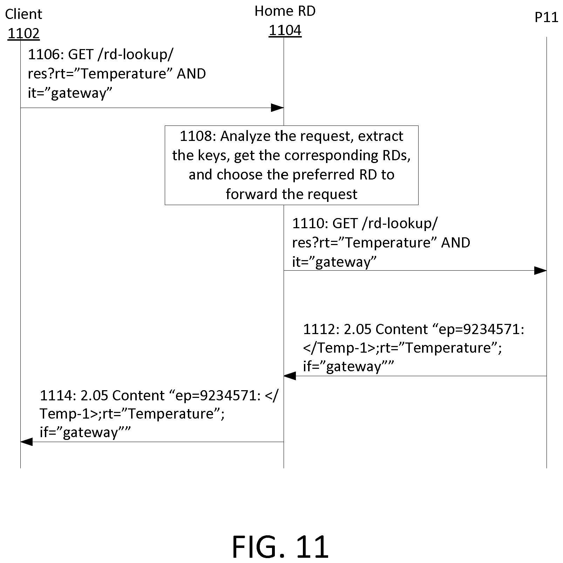

Examples are presented below to illustrate resource and group lookups in accordance with various example embodiments. Referring to Fig. 11, an example that includes a GET /rd-lookup/res?rt="Temperature" AND it="gateway" lookup request is illustrated. Fig. 11 shows an example network 1100 that includes a client 1102, a home RD 1104, and peer 11 (P11). It will be appreciated that the example network 1100 is simplified to facilitate description of the disclosed subject matter and is not intended to limit the scope of this disclosure. Other devices, systems, and configurations may be used to implement the embodiments disclosed herein in addition to, or instead of, a network such as the network 1100, and all such embodiments are contemplated as within the scope of the present disclosure.

As shown, at 1106, the client 1102 sends the resource lookup request to its Home RD 1104. The client 1102 wants to get the resources satisfying rt="Temperature" and it="gateway" at the same time. At 1108, the home RD applies the hashing function to the two keys indicated in the request. When the hashing function is applied, in accordance with the example, the results include P11 and P6. In an example aspect, the home RD 1104 may choose either one of the indicated RDs (P11 and P6) to get the complete resource lookup result. In the illustrated example, the Home RD chooses P11, and sends the lookup request to P11, at 1110. At 1112, P11 returns a response associated with the request to the Home RD 1104. The Home RD 1104, at 1114, forwards the response to the client 1102.

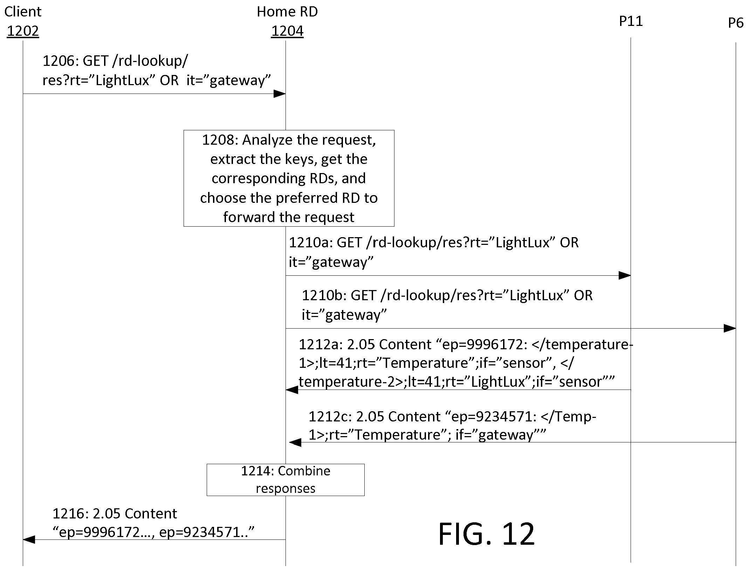

Referring to Fig. 12, an example that includes a GET /rd-lookup/res?rt="LightLux" OR it="gateway" request is illustrated. Fig. 12 shows an example network 1200 that includes a client 1202, a home RD 1204, and peers 11 (P11) and 6 (P6). It will be appreciated that the example network 1200 is simplified to facilitate description of the disclosed subject matter and is not intended to limit the scope of this disclosure. Other devices, systems, and configurations may be used to implement the embodiments disclosed herein in addition to, or instead of, a network such as the network 1200, and all such embodiments are contemplated as within the scope of the present disclosure.

As shown, at 1206, the client 1202 sends the resource lookup request to its Home RD 1204. The client 1202 wants to get the resources satisfying rt="LightLux" or it="gateway". At 1208, the home RD applies the hashing function to the two keys indicated in the request. When the hashing function is applied, in accordance with the example, the results include P11 and P6. In an example aspect, because OR connects the keys, the home RD 1104 needs to forward request to both indicated RDs (P11 and P6) to get the complete resource lookup result. Thus, in the illustrated example, the Home RD sends the lookup request to P11 (at 1210a) and to P6 (at 1210b) At 1212a and 1212b, P11 and P6, respectively, returns a response associated with the request to the Home RD 1204. At 1214, the Home RD may combine the received responses. Further, at 1214, the home RD 1204 may combine the results such that duplicate responses are eliminated. At 1216, the Home RD sends the combined response, which is the complete lookup result, to the client 1202, thereby satisfying the lookup request.

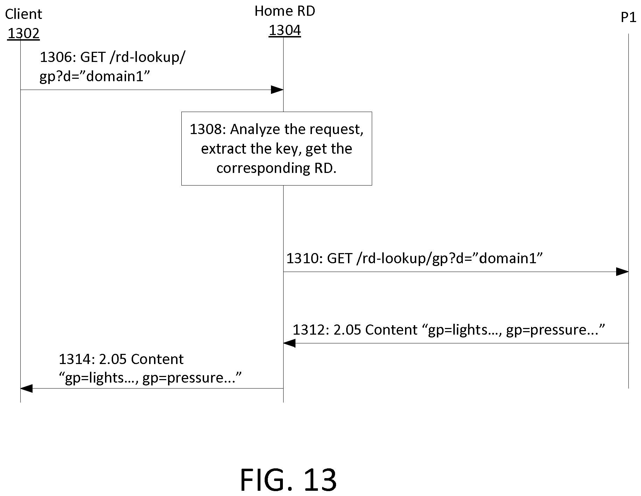

Referring now to Fig. 13, an example of a group lookup request that includes a GET /rd-lookup/gp?d="domain1" lookup request is illustrated. Fig. 13 shows an example network 1300 that includes a client 1302, a home RD 1304, and peer 1 (P1). It will be appreciated that the example network 1300 is simplified to facilitate description of the disclosed subject matter and is not intended to limit the scope of this disclosure. Other devices, systems, and configurations may be used to implement the embodiments disclosed herein in addition to, or instead of, a network such as the network 1300, and all such embodiments are contemplated as within the scope of the present disclosure.

As shown, at 1306, the client 1302 sends the resource lookup request to its Home RD 1304. The client 1302 wants to get the groups satisfying d= "domain1". At 1308, the home RD applies the hashing function to the key indicated in the request (d= "domain1"). When the hashing function is applied, in accordance with the example, the results include P1. In the illustrated example, the Home RD 1304 sends the lookup request to P1, at 1310. At 1312, P11 returns a response associated with the request to the Home RD 1304. The Home RD 1304, at 1314, forwards the response to the client 1302.

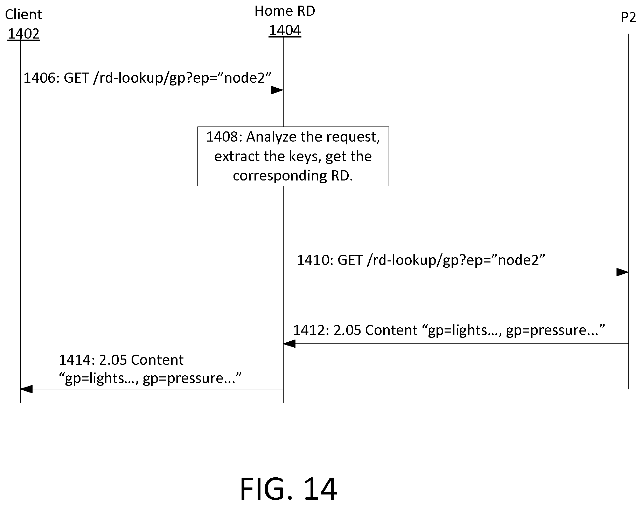

Referring now to Fig. 14, an example of a group lookup request that includes a GET /rd-lookup/gp?ep="node2" lookup request is illustrated. Fig. 14 shows an example network 1400 that includes a client 1402, a home RD 1404, and peer 2 (P2). It will be appreciated that the example network 1400 is simplified to facilitate description of the disclosed subject matter and is not intended to limit the scope of this disclosure. Other devices, systems, and configurations may be used to implement the embodiments disclosed herein in addition to, or instead of, a network such as the network 1400, and all such embodiments are contemplated as within the scope of the present disclosure.

As shown, at 1406, the client 1402 sends the resource lookup request to its Home RD 1404. The client 1402 wants to get the group with the endpoint (node2) in it. At 1408, the home RD applies the hashing function to the key indicated in the request (ep = "node2"). When the hashing function is applied, in accordance with the example, the results include P2, which is node 2. In the illustrated example, the Home RD 1404 sends the lookup request to P2, at 1410. At 1412, P1 returns a response associated with the request to the Home RD 1404. The Home RD 1404, at 1414, forwards the response to the client 1402.

In another example embodiment, which can be referred to as a referenced ensured (RE) implementation, peer RDs keep a reference of the storing RD, for instance rather than storing the resources themselves.

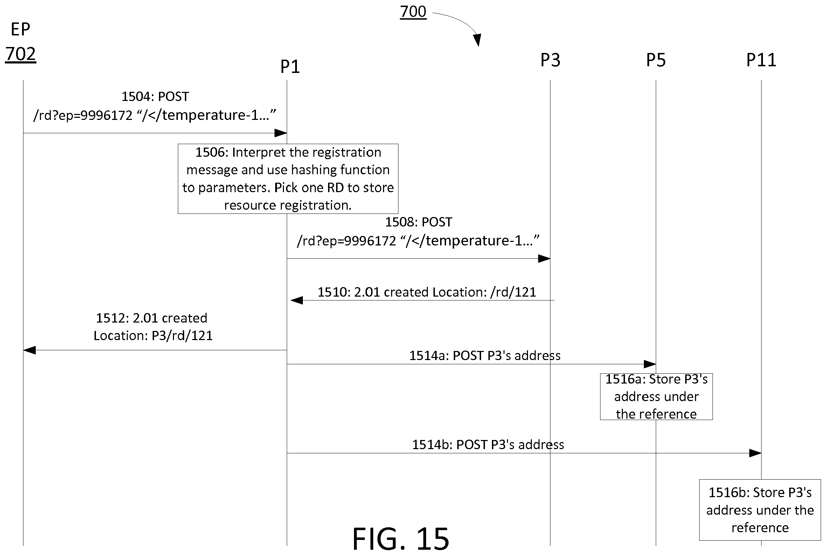

Referring now to Fig. 15, the example network 700 is shown that includes the EP 702 and peers 1, 3, 5, and 11 (P1, P3, P5, and P11). As shown, in accordance with the illustrated example, the endpoint 702 has a name of 9996172 and registers its resources to the P1, which is its home RD, at 1504. At 1506, the P1 may interpret the link format contained in the payload and determine that the key words/parameters associated with this registration are:
- ep=9996172
- lt=41
- rt="Temperature"
- rt="LightLux"
- if="sensor"

The above keywords/parameters may be used as keys to be applied to the hashing function. When the hashing function is applied, in accordance with the example, the results include P3, P5, and P11. Further, in accordance with the illustrated example, at 1506, the P1 may choose one of the three resulting RDs (P3, P5, or P11) to which the registration message is forwarded. At 1508, the P1 forwards the registration message to the chosen peer (P3). At 1510, P3 stores the payload and returns a confirmation to P1. At 1514a and 1514b, the P1 notifies P5 and P11, respectively, that the registration message is stored at P3. At 1516a and 1516b, P5 and P11, respectively, store P3's address under the appropriate reference for future resource lookup. At 1512, P1 replies to the EP 702, thereby satisfying the resource request.

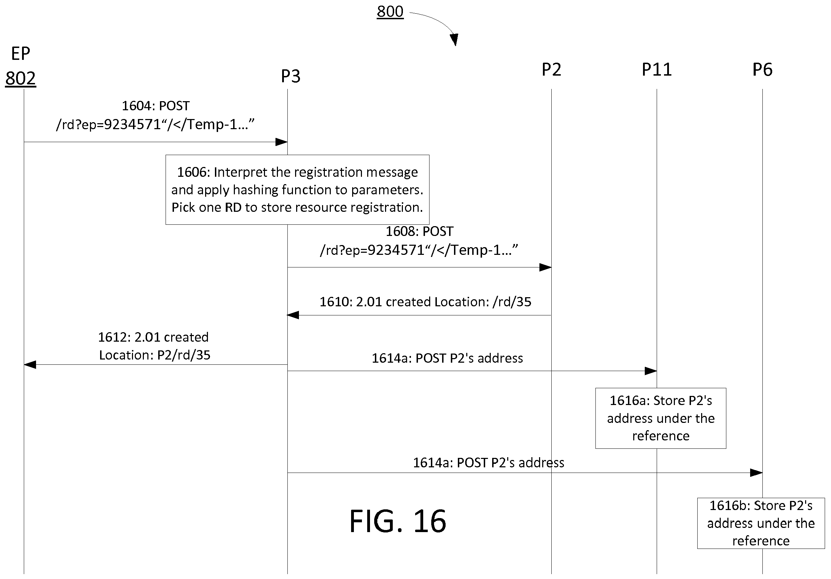

Referring now to Fig. 16, the example network 800 is shown that includes the EP 802 and peers 1, 3, 5, and 11 (P3, P2, P11, and P6). As shown, in accordance with the illustrated example, the endpoint 802 registers its resources to the P3, which is its home RD, at 1604. At 1606, the P3 may interpret the link format contained in the payload and determine that the key words/parameters associated with this registration are:
- ep=9234571
- rt="Temperature"
- if="gateway"

The above keywords/parameters may be used as keys to be applied to the hashing function. When the hashing function is applied, in accordance with the example, the results include P2, P11, and P6. Further, in accordance with the illustrated example, at 1606, the P3 may choose one of the three resulting RDs (P2, P11, or P6) to which the registration message is forwarded. At 1608, the P3 forwards the registration message to the chosen peer (P2). At 1610, P2 stores the payload and returns a confirmation to P3. At 1614a and 1614b, the P3 notifies P11 and P6, respectively, that the registration message is stored at P2. At 1616a and 1616b, P11 and P6, respectively, store P2's address under the appropriate reference for future resource lookup. At 1612, P1 replies to the EP 802, thereby satisfying the resource request.

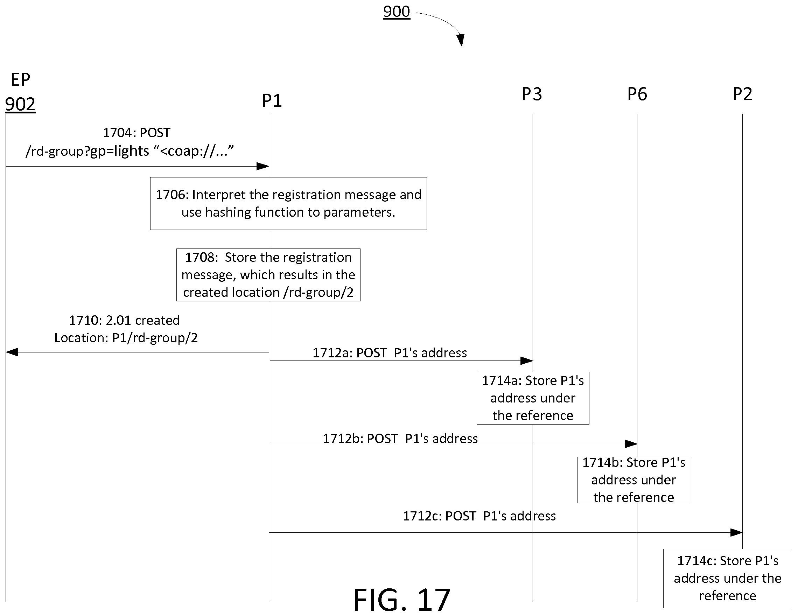

Referring now to Fig. 17, a "lights" group registration example is presented in accordance with an example embodiment. As shown, the example network 900 includes an EP 902, which is also a management node as described below, and peers 1, 3, 6, and 2 (P1, P3, P6, and P2). At 1704, the EP 902 makes a request to its home RD (P1). The request indicates the name of the group to create and the optional domain to which the group belongs. The registration message may also include the list of endpoints that belong to that group. At 1706, the P1 may interpret the link format contained in the payload and determine that the key words/parameters associated with this registration are:
- gp=lights
- ep="node1"
- d="domain1"
- ep="node2"

The above keywords/parameters may be used as inputs of the hashing function. When the hashing function is applied, in accordance with the example, the results include P1, P3, P6, and P2. As shown, at 1708, the P1 stores the registration to itself, for example, to save the network bandwidth used in forwarding a registration message. At 1712a-c, the P1 may notify P3, P6, and P2 that the resource registration is stored in P1, which includes a parameter for which each of the peers are responsible. At 1714a-c, P3, P6 and P2 may store P1's address under the appropriate reference for future resource lookup. At 1710, the result is sent to the EP 902.

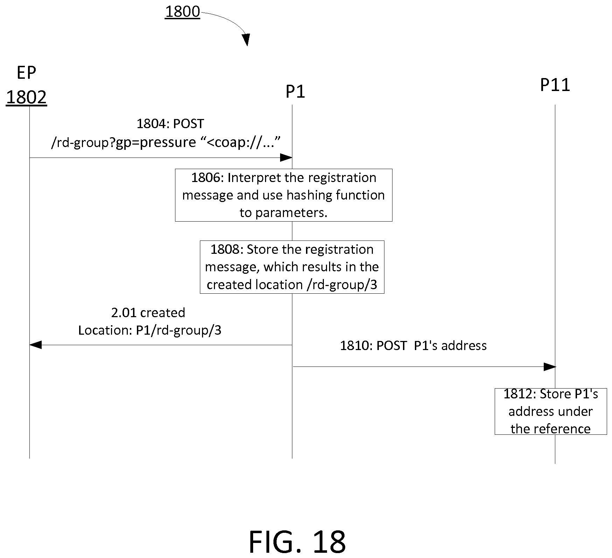

Referring now to Fig. 18, a "pressure" group registration example is presented in accordance with an example embodiment. As shown, the example network 1800 includes an EP 1802 and peers 1 and 11. It will be appreciated that the example network 1800 is simplified to facilitate description of the disclosed subject matter and is not intended to limit the scope of this disclosure. Other devices, systems, and configurations may be used to implement the embodiments disclosed herein in addition to, or instead of, a network such as the network 1800, and all such embodiments are contemplated as within the scope of the present disclosure.

At 1804, the peer P1 may receive the group registration request. At 1806, the hashing function may map the group resource to the peer RD P11, P1, and P2. At 1808, the P1 may store the registration to itself to save the network bandwidth usage in forwarding the registration message. At 1810, the P1 may notify P11 that a resource registration is stored in P1. As shown, because P1's address has already been notified to P2 (at 1804), P2 does not need to be notified at 1810. At 1812, the P11 may store P1's address under the appropriate reference for future resource lookup.

In an example embodiment, after the distributed resource and group registration described in the above examples occurs, the peer RDs may store the information shown in Table 2 (below).

**Table 2: Example Resource Directory Content in example RE Implementation**

| **P1** | | |
|---|---|---|
| rd-group | 2 | gp=lights: |
| | | <coap://host1:port1>; ep="node1";d="domain1", |
| | | < coap://host1:port1>;ep="node2";d="domain1" |
| | 3 | gp=pressure: |
| | | < coap://host2:port2>;ep="node2";d="domain1" |

| **P2** | | |
|---|---|---|
| rd | 35 | ep=9234571: |
| | | </Temp-1>;rt="Temperature"; if="gateway" |
| Reference | P1 | |

| **P3** | | |
|---|---|---|
| rd | 121 | ep=9996172: |
| | | </temperature-1>;lt=41;rt="Temperature";if="sensor", |
| | | </temperature-2>;lt=41;rt="LightLux";if="sensor" |
| Reference | P1 | |

| **P5** | | |
|---|---|---|
| Reference | P3 | |

| **P6** | | |
|---|---|---|
| Reference | P2 | |
| | P1 | |

| **P11** | | |
|---|---|---|
| Reference | P3 | |
| | P2 | |
| | P1 | |

Turning now to resource and group lookup implementations, in another example embodiment, the client may send the resource and group lookup request to its home RD. The home RD may determine the responsible peer RDs corresponding to the parameters specified in the request, by using the hashing function to the parameters. In one example, only one parameter is contained in the request, and the home RD may forward the request to the responsible RD. The responsible RD may search the rd or rd-group directory, based on the lookup type specified in the request. The responsible RD may also forward the request to the RDs listed in its Reference category. The home RD may collect all the responses from the responsible RD and the RDs in the Reference category and may return the result to the client. In another example scenario, there are multiple parameters contained in the request and the parameters are connected by AND. In such a scenario, the home RD may forward the request to one of the responsible RDs (core responsible RD). The core responsible RD may apply the hashing function on the other parameters and may determine that there are other responsible RDs. The core responsible RD may forward the request to other responsible RDs, in which request for the list in the Reference category is also attached. The core responsible RD is able to find out the joint set of RDs in the Reference category of all responsible RDs. The Core responsible RD then may forward the request to the joint set of RDs. The Core responsible RD may collect all the responses and may return to them the home RD, which in turns returns the response to the client.

In another example scenario, there are multiple parameters contained in the request and the parameters are connected by OR. In such a scenario, the home RD may forward the request to one of the responsible RDs (core responsible RD). The core responsible RD may apply the hashing function to the other parameters and may determine that there are other responsible RDs. The core responsible RD may forward the request to other responsible RDs, in which request for the list in the Reference category is also attached. The core responsible RD is able to discover a super set of RDs in the Reference category of all responsible RDs. The Core responsible RD then may forward the request to the super set of RDs. It may collect all the responses and may return to the home RD, which in turns returns the response to the client.

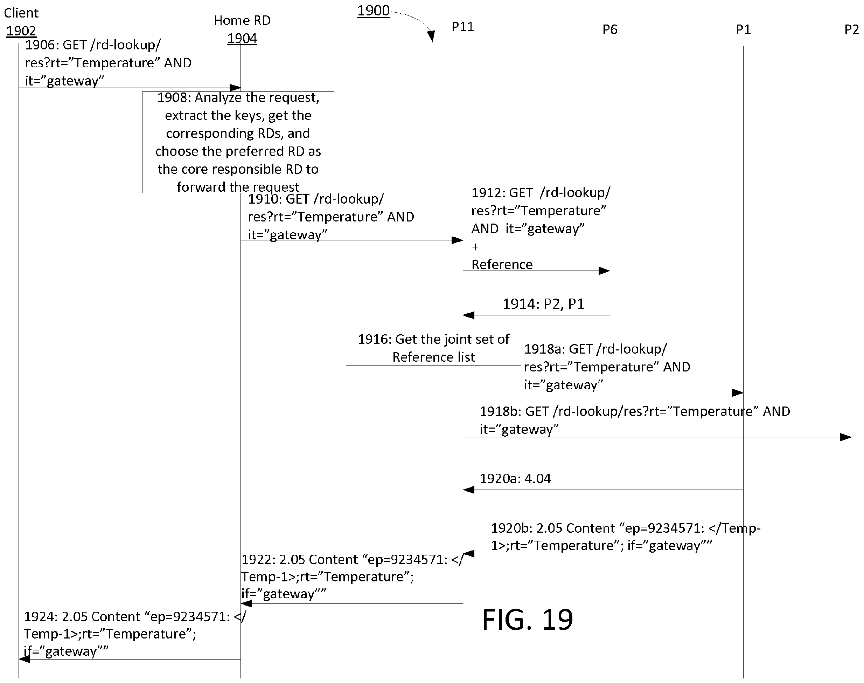

Referring now to Fig. 19, an example that includes the GET /rd-lookup/res?rt="Temperature" AND it="gateway" lookup request is illustrated. Fig. 19 shows an example network 1900 that includes a client 1902, a home RD 1904, and peers 11, 6, 1, and 2. It will be appreciated that the example network 1900 is simplified to facilitate description of the disclosed subject matter and is not intended to limit the scope of this disclosure. Other devices, systems, and configurations may be used to implement the embodiments disclosed herein in addition to, or instead of, a network such as the network 1900, and all such embodiments are contemplated as within the scope of the present disclosure.

As shown, at 1906, the client 1902 sends the resource lookup request to its Home RD 1904. The client 1902 wants to get the resources satisfying rt="Temperature" and it="gateway" at the same time. At 1908, the home RD 1904 may apply the two keys to the hashing function to get the responsible RDs, which are P11 and P6 in accordance with the illustrated example. The home RD 1904 may choose either one of them as the core responsible RD. In the illustrated example, the home RD 1904 chooses P11 and forwards the request accordingly (at 1910). As shown, the P11 may use the hashing function to the other parameter, and may determine that P6 is also a responsible RD. At 1912, P11 may send the request to P6, and the Reference list request may be included (attached) in the request. In an example, if the P6 does not find any matching resource, it may return the addresses of P2 and P1 to P11, at 1914. At 1916, the P11 is determines that P1 and P2 comprise the joint set (in both Reference lists). At 1918a and 1918b, the P11 then may forward the request to both P1 and P2, respectively. As shown, in accordance with the illustrated example, if the P1 does not find any matching resource, it may return a 'not found' response at 1920a. In accordance with the illustrated example, the P2 finds the matching resource, and returns it to P11 (at 1920b). At 1922, the P11 then may return the resource to the home RD 1904, which in turns sends the response to the client 1902 (at 1924).

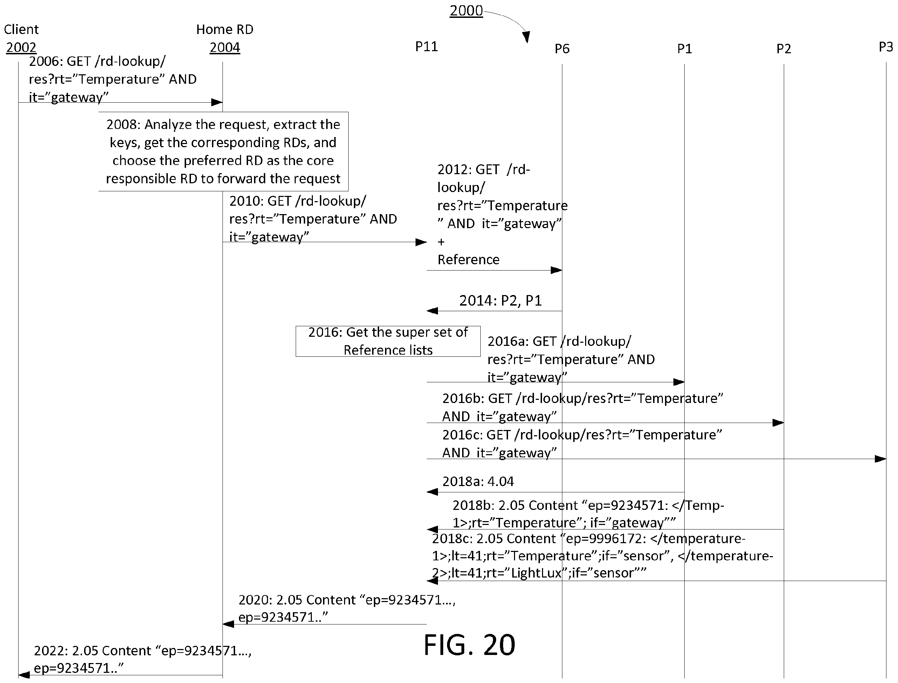

Referring now to Fig. 20, an example that includes the GET /rd-lookup/res?rt="LightLux" OR it="gateway" lookup request is illustrated. Fig. 20 shows an example network 2000 that includes a client 2002, a home RD 2004, and peers 11, 6, 1, 2, and 3. It will be appreciated that the example network 2000 is simplified to facilitate description of the disclosed subject matter and is not intended to limit the scope of this disclosure. Other devices, systems, and configurations may be used to implement the embodiments disclosed herein in addition to, or instead of, a network such as the network 2000, and all such embodiments are contemplated as within the scope of the present disclosure.

As shown, at 2006, the client 2002 sends the resource lookup request to its Home RD 2004. The client 2002 wants to get the resources satisfying rt="LightLux" or it="gateway". At 2008, the home RD 2004 may apply the two keys to the hashing function to get the corresponding RDs, which are P11 and P6 in the illustrated example. The home RD 2004 may choose either one of them as the core responsible RD (P11 in the illustrated example). The P11 may apply the hashing function to the other parameter, and may determine that P6 is also a responsible RD. AT 2012, P11 may the request to P6, and the Reference list may also be attached. At 2014, if the P6 does not find any matching resource, it may return the addresses of P2 and P1 to P11. At 2016, in accordance with the illustrated example, the P11 is able to determine that P1, P2, and P3 are the super set of both Reference lists. At 2018a-c, the P11 then may forward the request to P1, P2, and P3, respectively. At 2018a, if the P1 does not find any matching resource, it may return a "not found" response. At 2018b and 2018c, the P2 and P3 may find the matching resource, and may return it to P11. The P11 may concatenate all the matching resources and may return them to the home RD 2004 (at 2020), which in turns sends the response to the client 2002 (at 2022).

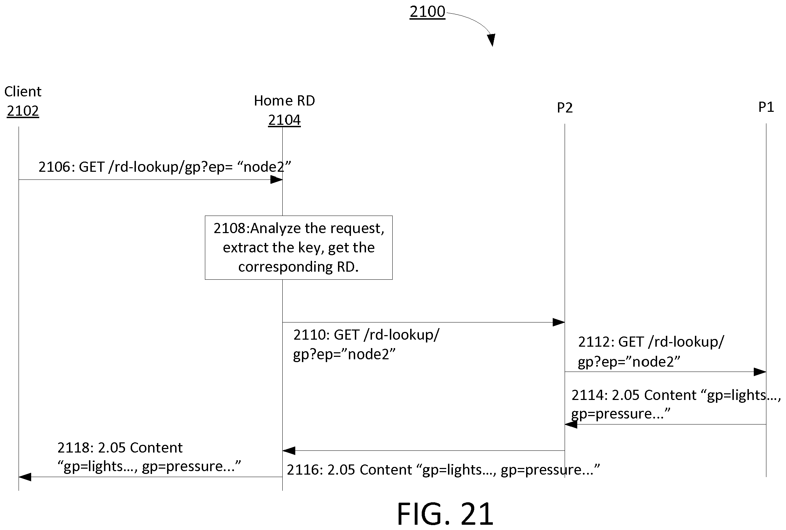

Fig. 21 illustrates another example resource lookup example 4 in accordance with an example embodiment. In this example embodiment, a client 2102 may perform a group lookup. At 2106, the client 2102 sends the GET /rd-lookup/gp?ep= "node2" request to its Home RD 2104. As shown, the client 2102 wants to get the group with the end point (node2) in it. At 2108, the home RD 2104 may apply the key (ep= "node2") to the hashing function to get the corresponding RD, which is P2 in the illustrated example. The home RD 2104 may forward the request to P2, at 2110. The P2 may have P1 stored in the Reference category. As a result, the P2 may forward the request to P1, at 2112. At 2114, in accordance with the illustrated example, the P1 finds the matching resources and returns them to P2. At 2116, the P2 may return the response to the home RD 2104, which in turn sends the response to the client 2102 (at 2116).

Thus, as described throughout the above disclosure, a node can determine one or more keys associated with a message payload that is received from an endpoint. The endpoint may be configured to operate as a web server, an M2M device, or gateway. The node may include a processor, a memory, and communication circuitry. The node may be connected to a communications network via its communication circuitry, and the node may include computer-executable instructions stored in the memory of the node which, when executed by the processor of the node, cause the node to perform various operations. In one example, the message payload includes a registration request. The node may apply the one or more keys to a hash function to generate mapping information. As described above, the mapping information may include at least one identity of a peer resource directory server. The node may transmit, based on the mapping information, the message payload to one or more peer resource directory servers. The node may receive at least one response from the one or more peer resource directory servers. The at least one response may be indicative of a location of the resource. And, as also described in detail above, based on the received at least one response, the node (e.g., a resource directory server) may transmit a resulting response to the endpoint. The one of more keys associated with the message payload may include at least one parameter and at least one value associated with the least one parameter. The at least one parameter may include a domain, an endpoint, a group name, an endpoint type, a resource type, a resource life time, or an interface. In one example that is described in detail above, the at least one parameter is a plurality of parameters and the at least one value is a plurality of values, the hash function is applied to each of the parameters and the values in the registration request. Further, the one or more peer resource directory servers to which the message payload is transmitted may be a plurality of peer resource directory servers that each store the message payload, and the node may determine, based on how many of the parameters are in the message payload, how many peer resources directory servers are in the plurality of peer resource directory servers. Alternatively, as also described in detail above, the one or more peer resource directory servers to which the message payload is transmitted may be a select one peer resource directory server that stores the message payload, the node may transmit, to a plurality of peer resource directory servers, a reference to the select one peer resource directory such that the plurality of peer resource directors store the reference to the select one peer resource directory that stores the message payload. It will be understood that the registration request may include a name and a resource description of the endpoint.

In another example, the message payload includes a resource lookup request, and the one or more keys associated with the message payload include one or more parameters. The resource lookup request may include a lookup type and one or more parameters. In one example, if the parameters are connected with each other using a first logical connective (e.g., AND), the node transmits the message payload to a plurality of peer resource directory servers. The plurality may be based on how many parameters are in the message payload. In another example, as described in detail above, if the parameters are connected with each other using a second logical connective (e.g., OR), the node transmits the message payload to only one peer resource directory server. Thus, the one or more peer resource directory servers to which the message payload is transmitted may be a select one peer resource directory server that propagates the resource lookup request to other peer resource directory servers indicated by the mapping information.

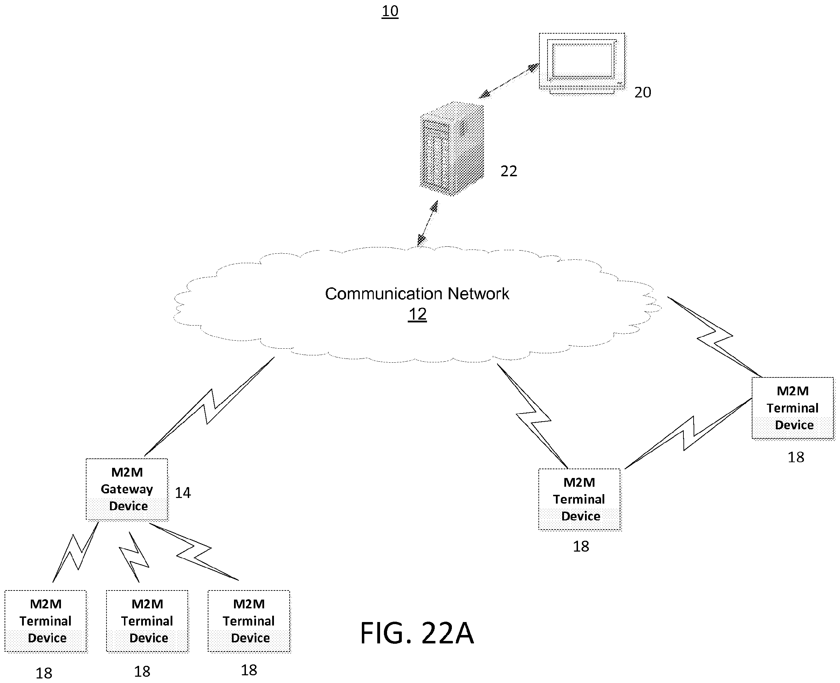

Fig. 22A is a diagram of an example machine-to-machine (M2M), Internet of Things (IoT), or Web of Things (WoT) communication system 10 in which one or more disclosed embodiments may be implemented. Generally, M2M technologies provide building blocks for the IoT/WoT, and any M2M device, M2M gateway or M2M service platform may be a component of the IoT/WoT as well as an IoT/WoT service layer, etc. Any of the clients, endpoints, peers, or resource directories illustrated in any of Figs. 7-21 may comprise a node of a communication system such as the one illustrated in Figs. 22A-D.

As shown in Fig. 22A, the M2M/ IoT/WoT communication system 10 includes a communication network 12. The communication network 12 may be a fixed network (e.g., Ethernet, Fiber, ISDN, PLC, or the like) or a wireless network (e.g., WLAN, cellular, or the like) or a network of heterogeneous networks. For example, the communication network 12 may comprise multiple access networks that provide content such as voice, data, video, messaging, broadcast, or the like to multiple users. For example, the communication network 12 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like. Further, the communication network 12 may comprise other networks such as a core network, the Internet, a sensor network, an industrial control network, a personal area network, a fused personal network, a satellite network, a home network, or an enterprise network for example.

As shown in Fig. 22A, the M2M/ IoT/WoT communication system 10 may include the Infrastructure Domain and the Field Domain. The Infrastructure Domain refers to the network side of the end-to-end M2M deployment, and the Field Domain refers to the area networks, usually behind an M2M gateway. The Field Domain and Infrastructure Domain may both comprise a variety of different nodes (e.g., servers, gateways, devices, of the network. For example, the Field Domain may include M2M gateways 14 and terminal devices 18. It will be appreciated that any number of M2M gateway devices 14 and M2M terminal devices 18 may be included in the M2M/ IoT/WoT communication system 10 as desired. Each of the M2M gateway devices 14 and M2M terminal devices 18 are configured to transmit and receive signals via the communication network 12 or direct radio link. A M2M gateway device 14 allows wireless M2M devices (e.g. cellular and non-cellular) as well as fixed network M2M devices (e.g., PLC) to communicate either through operator networks, such as the communication network 12 or direct radio link. For example, the M2M devices 18 may collect data and send the data, via the communication network 12 or direct radio link, to an M2M application 20 or M2M devices 18. The M2M devices 18 may also receive data from the M2M application 20 or an M2M device 18. Further, data and signals may be sent to and received from the M2M application 20 via an M2M service layer 22, as described below. M2M devices 18 and gateways 14 may communicate via various networks including, cellular, WLAN, WPAN (e.g., Zigbee, 6LoWPAN, Bluetooth), direct radio link, and wireline for example. Exemplary M2M devices include, but are not limited to, tablets, smart phones, medical devices, temperature and weather monitors, connected cars, smart meters, game consoles personal digital assistants, health and fitness monitors, lights, thermostats, appliances, garage doors and other actuator-based devices, security devices, and smart outlets.

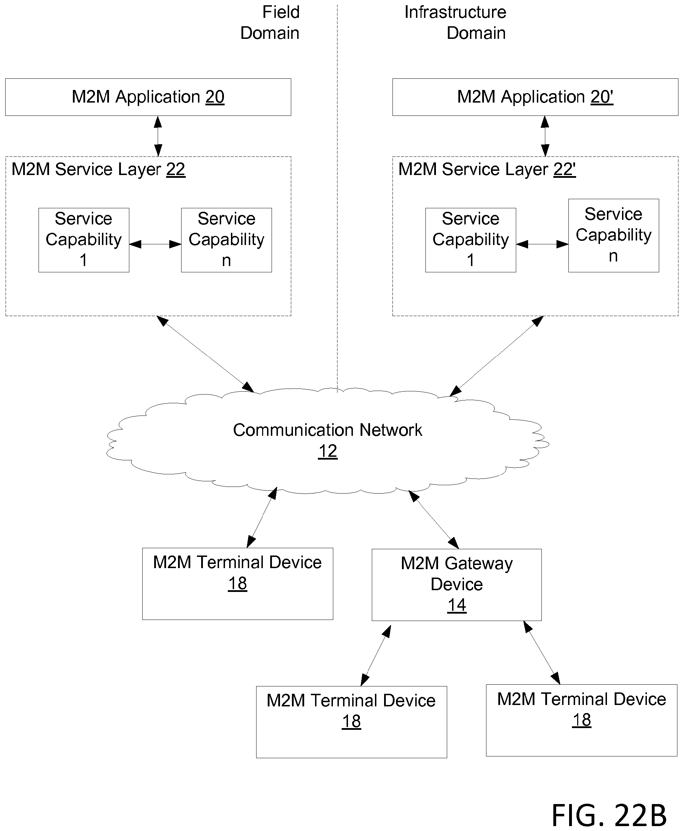

Referring to Fig. 22B, the illustrated M2M service layer 22 in the field domain provides services for the M2M application 20, M2M gateway devices 14, and M2M terminal devices 18 and the communication network 12. It will be understood that the M2M service layer 22 may communicate with any number of M2M applications, M2M gateway devices 14, M2M terminal devices 18, and communication networks 12 as desired. The M2M service layer 22 may be implemented by one or more servers, computers, or the like. The M2M service layer 22 provides service capabilities that apply to M2M terminal devices 18, M2M gateway devices 14 and M2M applications 20. The functions of the M2M service layer 22 may be implemented in a variety of ways, for example as a web server, in the cellular core network, in the cloud, etc.

Similar to the illustrated M2M service layer 22, there is the M2M service layer 22' in the Infrastructure Domain. M2M service layer 22' provides services for the M2M application 20' and the underlying communication network 12' in the infrastructure domain. M2M service layer 22' also provides services for the M2M gateway devices 14 and M2M terminal devices 18 in the field domain. It will be understood that the M2M service layer 22' may communicate with any number of M2M applications, M2M gateway devices and M2M terminal devices. The M2M service layer 22' may interact with a service layer by a different service provider. The M2M service layer 22' may be implemented by one or more servers, computers, virtual machines (e.g., cloud/compute/storage farms, etc.) or the like.

Still referring to Fig. 22B, the M2M service layer 22 and 22' provide a core set of service delivery capabilities that diverse applications and verticals can leverage. These service capabilities enable M2M applications 20 and 20' to interact with devices and perform functions such as data collection, data analysis, device management, security, billing, service/device discovery, etc. Essentially, these service capabilities free the applications of the burden of implementing these functionalities, thus simplifying application development and reducing cost and time to market. The service layer 22 and 22' also enables M2M applications 20 and 20' to communicate through various networks 12 and 12' in connection with the services that the service layer 22 and 22' provide.

The M2M applications 20 and 20' may include applications in various industries such as, without limitation, transportation, health and wellness, connected home, energy management, asset tracking, and security and surveillance. As mentioned above, the M2M service layer, running across the devices, gateways, and other servers of the system, supports functions such as, for example, data collection, device management, security, billing, location tracking/geofencing, device/service discovery, and legacy systems integration, and provides these functions as services to the M2M applications 20 and 20'.

Generally, a service layer (SL), such as the service layers 22 and 22' illustrated in Figs. 22A and 22B, defines a software middleware layer that supports value-added service capabilities through a set of application programming interfaces (APIs) and underlying networking interfaces. Both the ETSI M2M and oneM2M architectures define a service layer. ETSI M2M's service layer is referred to as the Service Capability Layer (SCL). The SCL may be implemented in a variety of different nodes of the ETSI M2M architecture. For example, an instance of the service layer may be implemented within an M2M device (where it is referred to as a device SCL (DSCL)), a gateway (where it is referred to as a gateway SCL (GSCL)) and/or a network node (where it is referred to as a network SCL (NSCL)). The oneM2M service layer supports a set of Common Service Functions (CSFs) (i.e. service capabilities). An instantiation of a set of one or more particular types of CSFs is referred to as a Common Services Entity (CSE), which can be hosted on different types of network nodes (e.g. infrastructure node, middle node, application-specific node). The Third Generation Partnership Project (3GPP) has also defined an architecture for machine-type communications (MTC). In that architecture, the service layer, and the service capabilities it provides, are implemented as part of a Service Capability Server (SCS). Whether embodied in a DSCL, GSCL, or NSCL of the ETSI M2M architecture, in a Service Capability Server (SCS) of the 3GPP MTC architecture, in a CSF or CSE of the oneM2M architecture, or in some other node of a network, an instance of the service layer may be implemented in a logical entity (e.g., software, computer-executable instructions, and the like) executing either on one or more standalone nodes in the network, including servers, computers, and other computing devices or nodes, or as part of one or more existing nodes. As an example, an instance of a service layer or component thereof (e.g., the AS/SCS 100) may be implemented in the form of software running on a network node (e.g., server, computer, gateway, device, or the like) having the general architecture illustrated in Fig. 22C or 22D described below.

Further, the methods and functionalities described herein may be implemented as part of an M2M network that uses a Service Oriented Architecture (SOA) and/or a resource-oriented architecture (ROA) to access services, such as the above-described Network and Application Management Service for example.

Fig. 22C is a block diagram of an example hardware/software architecture of a node of a network, such as one of the clients, endpoints, peers, or resource directories illustrated in Figs. 7-21 which may operate as an M2M server, gateway, device, or other node in an M2M network such as that illustrated in Figs. 22A and 22B. As shown in Fig. 22C, the node 30 may include a processor 32, a transceiver 34, a transmit/receive element 36, a speaker/microphone 38, a keypad 40, a display/touchpad 42, non-removable memory 44, removable memory 46, a power source 48, a global positioning system (GPS) chipset 50, and other peripherals 52. The node 30 may also include communication circuitry, such as a transceiver 34 and a transmit/receive element 36. It will be appreciated that the node 30 may include any sub-combination of the foregoing elements while remaining consistent with an embodiment. This node may be a node that implements the resource directory functionality described herein.

The processor 32 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 32 may perform signal coding, data processing, power control, input/output processing, and/or any other functionality that enables the node 30 to operate in a wireless environment. The processor 32 may be coupled to the transceiver 34, which may be coupled to the transmit/receive element 36. While Fig. 22C depicts the processor 32 and the transceiver 34 as separate components, it will be appreciated that the processor 32 and the transceiver 34 may be integrated together in an electronic package or chip. The processor 32 may perform application-layer programs (e.g., browsers) and/or radio access-layer (RAN) programs and/or communications. The processor 32 may perform security operations such as authentication, security key agreement, and/or cryptographic operations, such as at the access-layer and/or application layer for example.

As shown in Fig. 22C, the processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected. In particular, the processor 32 may control the communication circuitry in order to perform the transmitting and receiving steps described herein (e.g., in Figs. 7-21) and in the claims. While Fig. 22C depicts the processor 32 and the transceiver 34 as separate components, it will be appreciated that the processor 32 and the transceiver 34 may be integrated together in an electronic package or chip.

The transmit/receive element 36 may be configured to transmit signals to, or receive signals from, other nodes, including M2M servers, gateways, devices, and the like. For example, in an embodiment, the transmit/receive element 36 may be an antenna configured to transmit and/or receive RF signals. The transmit/receive element 36 may support various networks and air interfaces, such as WLAN, WPAN, cellular, and the like. In an embodiment, the transmit/receive element 36 may be an emitter/detector configured to transmit and/or receive IR, UV, or visible light signals, for example. In yet another embodiment, the transmit/receive element 36 may be configured to transmit and receive both RF and light signals. It will be appreciated that the transmit/receive element 36 may be configured to transmit and/or receive any combination of wireless or wired signals.

In addition, although the transmit/receive element 36 is depicted in Fig. 22C as a single element, the node 30 may include any number of transmit/receive elements 36. More specifically, the node 30 may employ MIMO technology. Thus, in an embodiment, the node 30 may include two or more transmit/receive elements 36 (e.g., multiple antennas) for transmitting and receiving wireless signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple RATs, such as UTRA and IEEE 802.11, for example.

The processor 32 may access information from, and store data in, any type of suitable memory, such as the non-removable memory 44 and/or the removable memory 46. The non-removable memory 44 may include random-access memory (RAM), read-only memory (ROM), a hard disk, or any other type of memory storage device. The removable memory 46 may include a subscriber identity module (SIM) card, a memory stick, a secure digital (SD) memory card, and the like. In other embodiments, the processor 32 may access information from, and store data in, memory that is not physically located on the node 30, such as on a server or a home computer. The processor 32 may be configured to control lighting patterns, images, or colors on the display or indicators 42 to reflect the status a UE (e.g., see GUI 1400), and in particular underlying networks, applications, or other services in communication with the UE. The processor 32 may receive power from the power source 48, and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which is configured to provide location information (e.g., longitude and latitude) regarding the current location of the node 30. It will be appreciated that the node 30 may acquire location information by way of any suitable location-determination method while remaining consistent with an embodiment.

The processor 32 may further be coupled to other peripherals 52, which may include one or more software and/or hardware modules that provide additional features, functionality and/or wired or wireless connectivity. For example, the peripherals 52 may include an accelerometer, an e-compass, a satellite transceiver, a sensor, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

Fig. 22D is a block diagram of an exemplary computing system 90 which may also be used to implement one or more nodes of a network, such as the clients, peers, and resource directories illustrated in Figs. 7-21, which may operates as an M2M server, gateway, device, or other node in an M2M network such as that illustrated in Figs. 22A and 22B. Computing system 90 may comprise a computer or server and may be controlled primarily by computer readable instructions, which may be in the form of software, wherever, or by whatever means such software is stored or accessed. Such computer readable instructions may be executed within central processing unit (CPU) 91 to cause computing system 90 to do work. In many known workstations, servers, and personal computers, central processing unit 91 is implemented by a single-chip CPU called a microprocessor. In other machines, the central processing unit 91 may comprise multiple processors. Coprocessor 81 is an optional processor, distinct from main CPU 91, which performs additional functions or assists CPU 91. CPU 91 and/or coprocessor 81 may receive, generate, and process data related to the disclosed systems and methods for E2E M2M service layer sessions, such as receiving session credentials or authenticating based on session credentials.

In operation, CPU 91 fetches, decodes, and executes instructions, and transfers information to and from other resources via the computer's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memory devices coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 can be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode can access only memory mapped by its own process virtual address space; it cannot access memory within another process's virtual address space unless memory sharing between the processes has been set up.

In addition, computing system 90 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain communication circuitry, such as for example a network adaptor 97 that may be used to connect computing system 90 to an external communications network, such as network 12 of Fig. 22A and Fig. 22B, to enable the computing system 90 to communicate with other nodes of the network. The communication circuitry, alone or in combination with the CPU 91, may be used to perform the transmitting and receiving steps described herein (e.g., in Figs. 7-21) and in the claims.

It will be understood that any of the methods and processes described herein may be embodied in the form of computer executable instructions (i.e., program code) stored on a computer-readable storage medium, and when the instructions are executed by a machine, such as a computer, server, M2M terminal device, M2M gateway device, or the like, perform and/or implement the systems, methods and processes described herein. Specifically, any of the steps, operations or functions described above may be implemented in the form of such computer executable instructions. Computer readable storage media include both volatile and nonvolatile, removable and non-removable media implemented in any method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other physical medium which can be used to store the desired information and which can be accessed by a computer.

In describing preferred embodiments of the subject matter of the present disclosure, as illustrated in the Figures, specific terminology is employed for the sake of clarity. The claimed subject matter, however, is not intended to be limited to the specific terminology so selected, and it is to be understood that each specific element includes all technical equivalents that operate in a similar manner to accomplish a similar purpose.

The following is a list of acronyms relating to service level technologies that may appear in the above description. Unless otherwise specified, the acronyms used herein refer to the corresponding term listed below.
- CoAP: Constrained Application Protocol
- CoRE: Constrained RESTful Environment
- DHT: Distributed Hash Table
- DRD: Distributed Resource Directory
- EP: End Point
- HTTP: Hypertext Transfer Protocol
- IETF: Internet Engineering Task Force
- IoT: Internet of Things
- M2M: Machine to Machine
- MAC: Medium Access Control
- RD: Resource Directory
- RE: Reference Ensured Mechanism
- SA: Storage Assisted Mechanism
- URI: Uniform Resource Identifier

## Claims

1. A node (P1) comprising a processor, a memory, and communication circuitry, the node being connected to a communications network via its communication circuitry, the node further comprising computer-executable instructions stored in the memory of the node which, when executed by the processor of the node, cause the node to:
determine (706) one or more keys associated with a message payload received from an endpoint (702), the message payload comprising a registration request associated with a resource, wherein the one of more keys associated with the message payload comprises a plurality of parameters and a plurality of values associated with the plurality of parameters;
apply (706) the one or more keys to a hash function to generate mapping information, the mapping information comprising at least one identity of a peer resource directory server (P3, P5, P11), wherein the hash function is applied to each of the parameters and the values in the registration request;
transmit (708a, 708b, 708c),, based on the mapping information, the message payload to one or more peer resource directory servers;
receive (710a, 710b, 710c) at least one response from the one or more peer resource directory servers, the at least one response being indicative of a respective location at which the resource is stored; and
based on the received at least one response, transmit (714) a resulting response to the endpoint (702).

2. The node of claim 1, wherein the one or more peer resource directory servers to which the message payload is transmitted is a plurality of peer resource directory servers that each store the message payload, and wherein the computer-executable instructions further cause the node to:
determine, based on how many of the parameters are in the message payload, how many peer resources directory servers are in the plurality of peer resource directory servers.

3. The node of claim 1, wherein the one or more peer resource directory servers to which the message payload is transmitted is a select one peer resource directory server that stores the message payload, and wherein the computer-executable instructions further cause the node to:
transmit, to a plurality of peer resource directory servers, a reference to the select one peer resource directory such that the plurality of peer resource directors store the reference to the select one peer resource directory that stores the message payload.

4. The node of claim 1, wherein the registration request comprises a name and a resource description of the endpoint.

5. A node comprising a processor, a memory, and communication circuitry, the node being connected to a communications network via its communication circuitry, the node further comprising computer-executable instructions stored in the memory of the node which, when executed by the processor of the node, cause the node to:
determine (1108) one or more keys associated with a message payload received from an endpoint (1102), the message payload comprising a resource lookup request associated with a resource, wherein the one of more keys associated with the message payload comprises a plurality of parameters and a plurality of values associated with the plurality of parameters;
apply (1108) the one or more keys to a hash function to generate mapping information, the mapping information comprising at least one identity of a peer resource directory server (P11), wherein the hash function is applied to each of the parameters and the values in the registration request;
transmit (1110), based on the mapping information, the message payload to one or more peer resource directory servers;
receive (1112) at least one response from the one or more peer resource directory servers, the at least one response indicating content of the resource that is stored on the one or more peer resource directory servers; and
based on the received at least one response, transmit (1114) a resulting response to the endpoint (1102).

6. The node of claim 1 or 5, wherein the plurality of parameters indicate a domain, an endpoint, a group name, an endpoint type, a resource type, a resource life time, or an interface.

7. The node of claim 5, wherein the resource lookup request comprises a lookup type and one or more parameters.

8. The node of claim 5, wherein the computer-executable instructions further cause the node to:
if the parameters are connected with each other using a first logical connective, transmit the message payload to a plurality of peer resource directory servers, the plurality based on how many parameters are in the message payload; and
if the parameters are connected with each other using a second logical connective, transmit the message payload to only one peer resource directory server.

9. The node of claim 5, wherein the one or more peer resource directory servers to which the message payload is transmitted is a select one peer resource directory server that propagates the resource lookup request to other peer resource directory servers indicated by the mapping information.

10. The node of claim 1 or 5, wherein the endpoint is configured to operate as a web server, a machine-to-machine device, or a gateway.

11. A method comprising:
determining, by a resource directory server, one or more keys associated with a message payload received from an endpoint, the message payload comprising at least one of a registration request or a resource lookup request associated with a resource, wherein the one of more keys associated with the message payload comprises a plurality of parameters and a plurality of values associated with the plurality of parameters;
applying the one or more keys to a hash function to generate mapping information, the mapping information comprising at least one identity of a peer resource directory server, wherein the hash function is applied to each of the parameters and the values in the registration request;
transmitting, based on the mapping information, the message payload to one or more peer resource directory servers;
receiving, at the resource directory server, at least one response from the one or more peer resource directory servers, the at least one response being indicative of a respective location where the resource is stored or content of the resource that is stored on the one or more peer resource directory servers; and
based on the received at least one response, transmitting a resulting response to the endpoint.

## Patentansprüche

1. Knoten (P1), der einen Prozessor, einen Speicher und eine Kommunikationsschaltungsanordnung umfasst, wobei der Knoten über seine Kommunikationsschaltungsanordnung mit einem Kommunikationsnetz verbunden ist und der Knoten ferner computerausführbare Anweisungen umfasst, die im Speicher des Knotens gespeichert sind und dann, wenn sie durch den Prozessor des Knotens ausgeführt werden, den Knoten veranlassen zum:
Bestimmen (706) eines oder mehrerer Schlüssel, die einer Nachrichtennutzlast, die von einem Endpunkt (702) empfangen wird, zugeordnet sind, wobei die Nachrichtennutzlast eine Registrierungsanforderung, die einem Betriebsmittel zugeordnet ist, umfasst und der eine oder die mehreren Schlüssel, die der Nachrichtennutzlast zugeordnet sind, mehrere Parameter und mehrere Werte, die den mehreren Parametern zugeordnet sind, umfassen;
Anwenden (706) des einen oder der mehreren Schlüssel auf eine Prüfsummenfunktion, um Abbildungsinformationen zu erzeugen, wobei die Abbildungsinformationen mindestens eine Identität eines Partnerbetriebsmittelverzeichnis-Servers (P3, P5, P11) umfassen und die Prüfsummenfunktion auf jeden der Parameter und der Werte in der Registrierungsanforderung angewendet wird;
Senden (708a, 708b, 708c) auf der Grundlage der Abbildungsinformationen der Nachrichtennutzlast zu einem oder mehreren Partnerbetriebsmittelverzeichnis-Servern;
Empfangen (710a, 710b, 710c) mindestens einer Antwort von dem einen oder den mehreren Partnerbetriebsmittelverzeichnis-Servern, wobei die mindestens eine Antwort einen jeweiligen Ort, bei dem das Betriebsmittel untergebracht ist, angibt; und
Senden (714) auf der Grundlage der mindestens einen empfangenen Antwort einer resultierenden Antwort zum Endpunkt (702).

2. Knoten nach Anspruch 1, wobei der eine oder die mehreren Partnerbetriebsmittelverzeichnis-Server, zu denen die Nachrichtennutzlast gesendet wird, mehrere Partnerbetriebsmittelverzeichnis-Server sind, die jeweils die Nachrichtennutzlast speichern, und die computerausführbaren Anweisungen ferner den Knoten veranlassen zum
Bestimmen auf der Grundlage davon, wie viele Parameter sich in der Nachrichtennutzlast befinden, wie viele Partnerbetriebsmittelverzeichnis-Server sich in den mehreren Partnerbetriebsmittelverzeichnis-Servern befinden.

3. Knoten nach Anspruch 1, wobei der eine oder die mehreren Partnerbetriebsmittelverzeichnis-Server, zu denen die Nachrichtennutzlast gesendet wird, ein gewählter Partnerbetriebsmittelverzeichnis-Server ist, in dem die Nachrichtennutzlast gespeichert ist, und wobei die computerausführbaren Anweisungen ferner den Knoten veranlassen zum
Senden zu mehreren Partnerbetriebsmittelverzeichnis-Servern einer Referenz zu dem gewählten einen Partnerbetriebsmittelverzeichnis derart, dass die mehreren Partnerbetriebsmittelverzeichnisse die Referenz zu dem gewählten einen Partnerbetriebsmittelverzeichnis, in dem die Nachrichtennutzlast gespeichert ist, speichern.

4. Knoten nach Anspruch 1, wobei die Registrierungsanforderung einen Namen und eine Betriebsmittelbeschreibung des Endpunkts umfasst.

5. Knoten, der einen Prozessor, einen Speicher und eine Kommunikationsschaltungsanordnung umfasst, wobei der Knoten über seine Kommunikationsschaltungsanordnung mit einem Kommunikationsnetz verbunden ist und der Knoten ferner computerausführbare Anweisungen umfasst, die im Speicher des Knotens gespeichert sind und, wenn sie durch den Prozessor des Knotens ausgeführt werden, den Knoten veranlassen zum:
Bestimmen (1108) eines oder mehrerer Schlüssel, die einer Nachrichtennutzlast, die von einem Endpunkt (1102) empfangen wird, zugeordnet sind, wobei die Nachrichtennutzlast eine Betriebsmittelnachschlaganforderung, die einem Betriebsmittel zugeordnet ist, umfasst und der eine oder die mehreren Schlüssel, die der Nachrichtennutzlast zugeordnet sind, mehrere Parameter und mehrere Werte, die den mehreren Parametern zugeordnet sind, umfassen;
Anwenden (1108) des einen oder der mehreren Schlüssel auf eine Prüfsummenfunktion, um Abbildungsinformationen zu erzeugen, wobei die Abbildungsinformationen mindestens eine Identität eines Partnerbetriebsmittelverzeichnis-Servers (P11) umfassen und die Prüfsummenfunktion auf jeden der Parameter und der Werte in der Registrierungsanforderung angewendet wird;
Senden (1110) auf der Grundlage der Abbildungsinformationen der Nachrichtennutzlast zu einem oder mehreren Partnerbetriebsmittelverzeichnis-Servern;
Empfangen (1112) mindestens einer Antwort von dem einen oder den mehreren Partnerbetriebsmittelverzeichnis-Servern, wobei die mindestens eine Antwort Inhalt des Betriebsmittels, der in dem einen oder den mehreren Partnerbetriebsmittelverzeichnis-Servern gespeichert ist, angibt; und
Senden (1114) auf der Grundlage der mindestens einen empfangenen Antwort einer resultierenden Antwort zum Endpunkt (1102).

6. Knoten nach Anspruch 1 oder 5, wobei die mehreren Parameter eine Domäne, einen Endpunkt, einen Gruppennamen, einen Endpunkttyp, einen Betriebsmitteltyp, eine Betriebsmittellebensdauer oder eine Schnittstelle angeben.

7. Knoten nach Anspruch 5, wobei die Betriebsmittelnachschlaganforderung einen Nachschlagtyp und einen oder mehrere Parameter umfasst.

8. Knoten nach Anspruch 5, wobei die computerausführbare Anweisungen den Knoten ferner veranlassen zum:
Senden dann, wenn die Parameter unter Verwendung einer ersten logischen Verbindung miteinander verbunden sind, der Nachrichtennutzlast zu einer Mehrzahl von Partnerbetriebsmittelverzeichnis-Servern, wobei die Mehrzahl als Grundlage verwendet, wie viele Parameter sich in der Nachrichtennutzlast befinden; und
Senden dann, wenn die Parameter unter Verwendung einer zweiten logischen Verbindung miteinander verbunden sind, der Nachrichtennutzlast lediglich zu einem Partnerbetriebsmittelverzeichnis-Server.

9. Knoten nach Anspruch 5, wobei der eine oder die mehreren Partnerbetriebsmittelverzeichnis-Server, zu denen die Nachrichtennutzlast gesendet wird, ein gewählter einer Partnerbetriebsmittelverzeichnis-Server ist, der die Betriebsmittelnachschlaganforderung zu weiteren Partnerbetriebsmittelverzeichnis-Servern, die durch die Abbildungsinformationen angegeben werden, verbreitet.

10. Knoten nach Anspruch 1 oder 5, wobei der Endpunkt konfiguriert ist, als ein Internet-Server, eine Maschinezu-Maschine-Vorrichtung oder ein Gateway zu arbeiten.

11. Verfahren, das Folgendes umfasst:
Bestimmen durch einen Betriebsmittelverzeichnis-Server eines oder mehrerer Schlüssel, die einer Nachrichtennutzlast, die von einem Endpunkt empfangen wird, zugeordnet sind, wobei die Nachrichtennutzlast eine Registrierungsanforderung und/oder eine Betriebsmittelnachschlaganforderung, die einem Betriebsmittel zugeordnet sind, umfasst und der eine oder die mehreren Schlüssel, die der Nachrichtennutzlast zugeordnet sind, mehrere Parameter und mehrere Werte, die den mehreren Parametern zugeordnet sind, umfassen;
Anwenden des einen oder der mehreren Schlüssel auf eine Prüfsummenfunktion, um Abbildungsinformationen zu erzeugen, wobei die Abbildungsinformationen mindestens eine Identität eines Partnerbetriebsmittelverzeichnis-Servers umfassen und die Prüfsummenfunktion auf jeden der Parameter und der Werte in der Registrierungsanforderung angewendet wird;
Senden auf der Grundlage der Abbildungsinformationen der Nachrichtennutzlast zu einem oder mehreren Partnerbetriebsmittelverzeichnis-Servern;
Empfangen beim Betriebsmittelverzeichnis-Server mindestens einer Antwort von dem einen oder den mehreren Partnerbetriebsmittelverzeichnis-Servern, wobei die mindestens eine Antwort einen jeweiligen Ort, bei dem das Betriebsmittel untergebracht ist, oder Inhalt des Betriebsmittels, der in dem einen oder den mehreren Partnerbetriebsmittelverzeichnis-Servern gespeichert ist, angibt; und
Senden auf der Grundlage der mindestens einen empfangenen Antwort einer resultierenden Antwort zum Endpunkt.

## Revendications

1. Nœud (P1) comprenant un processeur, une mémoire et des circuits de communication, le nœud étant connecté à un réseau de communication par l'intermédiaire de ses circuits de communication, le nœud comprenant en outre des instructions exécutables par ordinateur mémorisées dans la mémoire du nœud qui, à leur exécution par le processeur du nœud, amènent le nœud à :
déterminer (706) une ou plusieurs clés associées à une charge utile de message reçue à partir d'un point d'accès (702), la charge utile de message comprenant une demande d'enregistrement associée à une ressource, les une ou plusieurs clés associées à la charge utile de message comprenant une pluralité de paramètres et une pluralité de valeurs associée à la pluralité de paramètres ;
appliquer (706) les une ou plusieurs clés à une fonction de hachage pour générer des informations de correspondance, les informations de correspondance comprenant au moins une identité d'un serveur de répertoires de ressources homologues (P3, P5, P11), la fonction de hachage étant appliquée à chacun des paramètres et des valeurs dans la demande d'enregistrement ;
transmettre (708a, 708b, 708c), sur la base des informations de correspondance, la charge utile de message à un ou plusieurs serveurs de répertoires de ressources homologues ;
recevoir (710a, 710b, 710c) au moins une réponse à partir des un ou plusieurs serveurs de répertoires de ressources homologues, l'au moins une réponse indiquant un emplacement respectif auquel est stockée la ressource ; et
sur la base de l'au moins une réponse reçue, transmettre (714) une réponse de résultat au point d'accès (702).

2. Nœud selon la revendication 1, dans lequel les un ou plusieurs serveurs de répertoires de ressources homologues auxquels la charge utile de message est transmise sont une pluralité de serveurs de répertoires de ressources homologues qui stockent chacun la charge utile de message, et dans lequel les instructions exécutables par ordinateur amènent en outre le nœud à :
déterminer, sur la base du nombre de paramètres qui se trouvent dans la charge utile de message, le nombre de serveurs de répertoires de ressources homologues qui se trouve dans la pluralité de serveurs de répertoires de ressources homologues.

3. Nœud selon la revendication 1, dans lequel les un ou plusieurs serveurs de répertoires de ressources homologues auxquels la charge utile de message est transmise sont un seul serveur de répertoires de ressources homologues sélectionné qui stockent la charge utile de message, et dans lequel les instructions exécutables par ordinateur amènent en outre le nœud à :
transmettre, à une pluralité de serveurs de répertoires de ressources homologues une référence ce au répertoire de ressources moloch sélectionnées de telle sorte que la pluralité de répertoire de ressources homologue stocke la référence au répertoire de ressources homologues sélectionné qui stocke la charge utile de message.

4. Nœud selon la revendication 1, dans lequel la demande d'enregistrement comprend un nom et une description de ressource du point d'accès.

5. Nœud comprenant un processeur, une mémoire et des circuits de communication, le nœud étant connecté à un réseau de communication par l'intermédiaire de ses circuits de communication, le nœud comprenant en outre des instructions exécutables par ordinateur mémorisées dans la mémoire du nœud qui, à leur exécution par le processeur du nœud, amènent le nœud à :
déterminer (1108) une ou plusieurs clés associées à une charge utile de message reçue à partir d'un point d'accès (1102), la charge utile de message comprenant une demande de consultation de ressource associée à une ressource, les une ou plusieurs clés associées à la charge utile de message comprenant une pluralité de paramètres et une pluralité de valeurs associée à la pluralité de paramètres ;
appliquer (1108) les une ou plusieurs clés à une fonction de hachage pour générer des informations de correspondance, les informations de correspondance comprenant au moins une identité d'un serveur de répertoires de ressources homologues (P11), la fonction de hachage étant appliquée à chacun des paramètres et des valeurs dans la demande d'enregistrement ;
transmettre (1110), sur la base des informations de correspondance, la charge utile de message à un ou plusieurs serveurs de répertoires de ressources homologues ;
recevoir (1112) au moins une réponse à partir des un ou plusieurs serveurs de répertoires de ressources homologues, l'au moins une réponse indiquant un contenu de la ressource qui est stockée dans les un ou plusieurs serveurs de répertoires de ressources homologues ; et
sur la base de l'au moins une réponse reçue, transmettre (1114) une réponse de résultat au point d'accès (1102).

6. Nœud selon la revendication 1 ou 5, dans lequel la pluralité de paramètres indique un domaine, un point d'accès, un nom de groupe, un type de point d'accès, un type de ressource, une longévité de ressource ou une interface.

7. Nœud selon la revendication 5, dans lequel la demande de consultation de ressource comprend un type de consultation et un ou plusieurs paramètres.

8. Nœud selon la revendication 5, dans lequel les instructions exécutables par ordinateur amènent en outre le nœud à :
si les paramètres sont connectés les uns aux autres au moyen d'un premier connecteur logique, transmettre la charge utile de message à une pluralité de serveurs de répertoires de ressources homologues, la pluralité étant basée sur le nombre de paramètres qui se trouvent dans la charge utile de message ; et
si les paramètres sont connectés les uns aux autres au moyen d'un second connecteur logique, transmettre la charge utile de message à un seul serveur de répertoires de ressources homologues.

9. Nœud selon la revendication 5, dans lequel les un ou plusieurs serveurs de répertoires de ressources homologues auxquels la charge utile de message est transmise sont un seul serveur de répertoires de ressources homologues sélectionné qui propage la demande de consultation de ressources à d'autres serveurs de répertoires de ressources homologues indiqués par les informations de correspondance.

10. Nœud selon la revendication 1 ou 5, dans lequel le point d'accès est configuré pour fonctionner en tant que serveur Web, dispositif de machine à machine ou passerelle.

11. Procédé comprenant :
la détermination, par un serveur de répertoire de ressources, d'une ou plusieurs clés associées à une charge utile de message reçue depuis un point d'accès, la charge utile de message comprenant au moins une d'une demande d'enregistrement ou d'une demande de consultation de ressource associée à une ressource, les une ou plusieurs clés associées à la charge utile de message comprenant une pluralité de paramètres et une pluralité de valeurs associées à la pluralité de paramètres ;
l'application des une ou plusieurs clés à une fonction de hachage pour générer des informations de correspondance, les informations de correspondance comprenant au moins une identité d'un serveur de répertoires de ressources homologues, la fonction de hachage étant appliquée à chacun des paramètres et des valeurs dans la demande d'enregistrement ;
la transmission, sur la base des informations de correspondance, de la charge utile de message à un ou plusieurs serveurs de répertoires de ressources homologues ;
la réception, au niveau du serveur de répertoires de ressources, d'au moins une réponse à partir des un ou plusieurs serveurs de répertoires de ressources homologues, l'au moins une réponse indiquant un emplacement respectif où la ressource est stockée ou un contenu de la ressource qui est stockée sur les un ou plusieurs serveurs de répertoires de ressources homologues ; et
sur la base de l'au moins une réponse reçue, la transmission d'une réponse de résultat au point d'accès.
